(19) Europäisches Patentamt
European Patent Office
Office européen des brevets

(11) Veröffentlichungsnummer : **0 542 053 B1**

(12) # EUROPÄISCHE PATENTSCHRIFT

(45) Veröffentlichungstag der Patentschrift : **13.04.94 Patentblatt 94/15**

(51) Int. Cl.$^5$ : **G03C 7/388**, G03C 7/396, G03C 7/392

(21) Anmeldenummer : **92118519.5**

(22) Anmeldetag : **29.10.92**

(54) **Fotografisches Aufzeichnungsmaterial.**

(30) Priorität : **11.11.91 DE 4136965**

(43) Veröffentlichungstag der Anmeldung : **19.05.93 Patentblatt 93/20**

(45) Bekanntmachung des Hinweises auf die Patenterteilung : **13.04.94 Patentblatt 94/15**

(84) Benannte Vertragsstaaten : **BE DE FR GB**

(56) Entgegenhaltungen : **EP-A- 0 383 354**

(73) Patentinhaber : **Agfa-Gevaert AG**
**Kaiser-Wilhelm-Allee**
**D-51373 Leverkusen (DE)**

(72) Erfinder : **Helling, Günter, Dr.**
**In der Hildscheid 16**
**W-5068 Odenthal (DE)**
Erfinder : **Hagemann, Jörg, Dr.**
**Augustastrasse 7**
**W-5000 Köln 80 (DE)**

EP 0 542 053 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein fotografisches Aufzeichnungsmaterial mit mindestens einer Silberhalogenidemulsionsschicht, das neuartige Lichtschutzmittel für die bei der chromogenen Entwicklung erzeugten Bildfarbstoffe, insbesondere für gelbe oder purpurfarbene Azomethinfarbstoffe enthält.

Es ist bekannt, farbige fototgrafische Bilder durch chromogene Entwicklung herzustellen, d.h. dadurch, daß man bildmäßig belichtete Silberhalogenidemulsionsschichten in Gegenwart geeigneter Farbkuppler mittels geeigneter farbbildender Entwicklersubstanzen - sogenannter Farbentwickler - entwickelt, wobei das in Übereinstimmung mit dem Silberbild entstehende Oxidationsprodukt der Entwicklersubstanzen mit dem Farbkuppler unter Bildung eines Farbstoffbildes reagiert. Als Farbentwickler werden gewöhnlich aromatische, primäre Aminogruppen enthaltende Verbindungen, insbesondere solche vom p-Phenylendiamintyp, verwendet.

Es ist auch bekannt, daß die durch chromogene Entwicklung erzeugten Bildfarbstoffe in unterschiedlichem Ausmaß unter dem Einfluß der Umweltbedingungen gewisse Veränderungen erleiden. Besonders auffällig ist dies, was die Einwirkung von Licht betrifft. Bekanntlich bleichen hierbei die aus Pyrazoloazolkupplern erzeugten Magentafarbstoffe besonders stark aus, während sich die aus phenolischen Kupplern erzeugte Blaugrünfarbstoffe in dieser Hinsicht als besonders wenig anfällig erwiesen.

Es hat nicht an Versuchen gefehlt, diesem Mangel durch besondere Maßnahmen abzuhelfen. Namentlich im Fall der Magentakuppler ist es gelungen, durch lichtstabilisierende Zusätze oder besondere Ausgestaltung der Kuppler zu verbesserter Lichtbeständigkeit zu gelangen. Als lichtstabilisierende Mittel eignen sich im wesentlichen phenolische Verbindungen, insbesondere Derivate des Hydrochinons, die entweder den Kupplern beigemischt oder in Form von Substituenten mit den Kupplermolekülen verknüpft werden (DE-B-1 547 803, DE-A-26 17 826, DE-A-29 52 511, JP-N 53 070 822, JP-N 54 070 830, JP-N 54 073 032). Die bekannten Lichtschutzmittel genügen jedoch noch nicht in jeder Hinsicht den an sie gestellten Anforderungen.

Der Erfindung liegt die Aufgabe zugrunde, für fotografische Aufzeichnungsmaterialien neuartige Lichtschutzmittel anzugeben, insbesondere solche, die für die Verbesserung der Lichtstabilität der aus Magentakupplern, insbesondere vom Typ der Pyrazoloazole erzeugten purpurfarbigen Bildfarbstoffe sowie der gelben Bildfarbstoffe geeignet sind.

Gegenstand der Erfindung ist ein farbfotografisches Aufzeichnungsmaterial mit mindestens einer Silberhalogenidemulsionsschicht und einem dieser zugeordneten Farbkuppler, dadurch gekennzeichnet, daß es in einer Silberhalogenidemulsionsschicht oder in einer hierzu benachbarten nicht lichtempfindlichen Bindemittelschicht eine Kombination aus einem Farbkuppler und einer Verbindung der allgemeinen Formel I enthält:

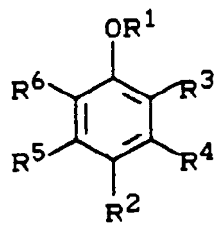

(I)

worin bedeuten

$R^1$ H, einen unter alkalischen Bedingungen abspaltbaren Rest, Alkyl oder Aryl;

$R^2$ -OH, Alkyl, Aryl, Alkoxy oder

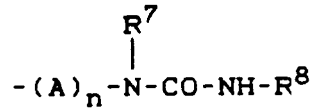

$R^3$, $R^4$, $R^5$ und $R^6$ H, -OH, -COOH, $-SO_3H$, $-SO_2H$, Alkyl, Aryl, Alkoxy, Alkylsulfonyl, Arylsulfonyl, gegebenenfalls z.B. durch Alkyl und/oder Aryl substituiertes Sulfamoyl, Acylamino oder

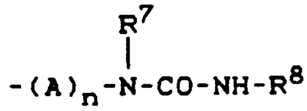

wobei mindestens einer der Reste $R^2$, $R^3$, $R^4$, $R^5$ und $R^6$ ein Rest der Formel

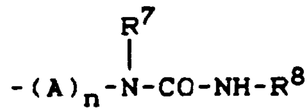

ist,

| | |
|---|---|
| A | Alkylen mit 1-6 C-Atomen; |
| n | 0 oder 1; |
| $R^7$ | H oder gegebenenfalls beispielsweise mit -COOH oder -$SO_3H$ substituiertes Alkyl, z.B. Carboxymethyl; |
| $R^8$ | den Rest eines durch Polykondensation erzeugten Polymers, insbesondere eines Polyesters, Polyethers, Polycarbonats, Polyurethans oder Polyesterpolyurethans; |
| $R^1$ und $R^3$ | können einen 5- oder 6-gliedrigen Ring bilden, wobei $R^2$ = -OH oder Alkoxy; |
| $R^2$ und $R^4$ | können einen 5- oder 6-gliedrigen carbocyclischen Ring bilden. |

Ein durch $R^1$ dargestellter unter alkalischen Bedingungen abspaltbarer Rest ist beispielsweise ein Acylrest, der sich ableitet von aliphatischen oder aromatischen Carbonsäuren; Beispiele für unter alkalischen Bedingungen abspaltbare Reste sind Acetyl, Dichloracetyl, Alkoxycarbonyl, Pyruvoyl.

Ein durch $R^2$ bis $R^6$ dargestellter Alkylrest enthält vorzugsweise 1 bis 4 C-Atome; Beispiele sind Methyl, Ethyl, Propyl, Isopropyl, Butyl, t-Butyl. Ein durch $R^2$ bis $R^6$ dargestellter Arylrest enthält 6 bis 10 C-Atome; Beispiele sind Phenyl und Naphthyl. Die Alkyl- bzw. Arylreste können weiter substituiert sein, z.B. mit Halogen oder Alkyl. Ein durch $R^2$ bis $R^6$ dargestellter Alkoxyrest kann 1 bis 18 C-Atome enthalten. Der Acylrest in einem durch $R^2$ bis $R^6$ dargestellten Acylaminorest leitet sich ab von aliphatischen oder aromatischen Carbon- oder Sulfonsäuren.

Beispiele für erfindungsgemäße Stabilisierungsmittel sind im folgenden angegeben.

S-1

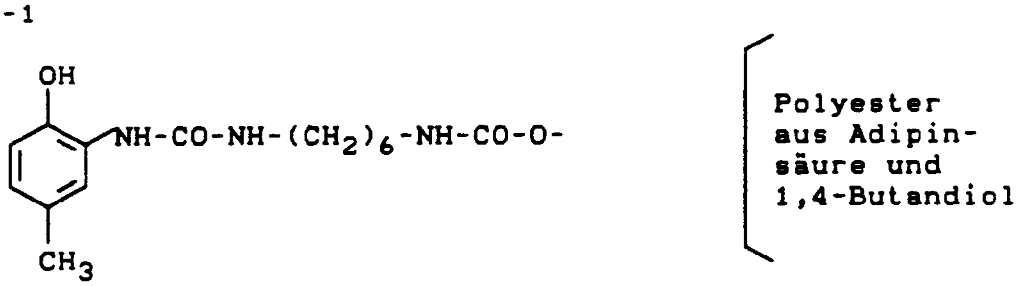


S-2

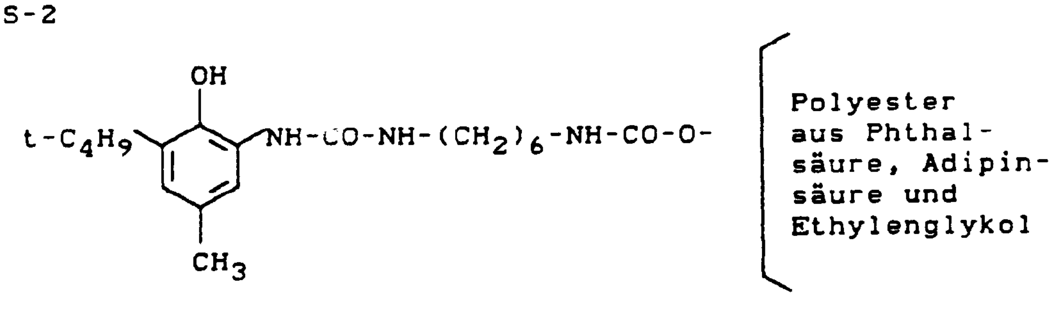

S-3

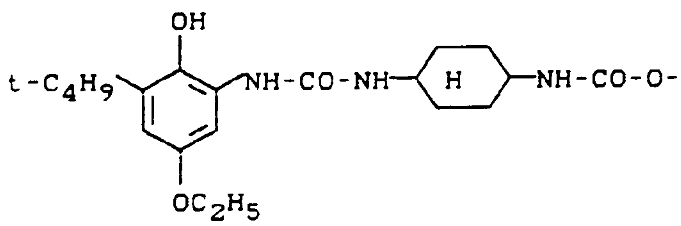

Polytetra-
hydrofuran

S-4

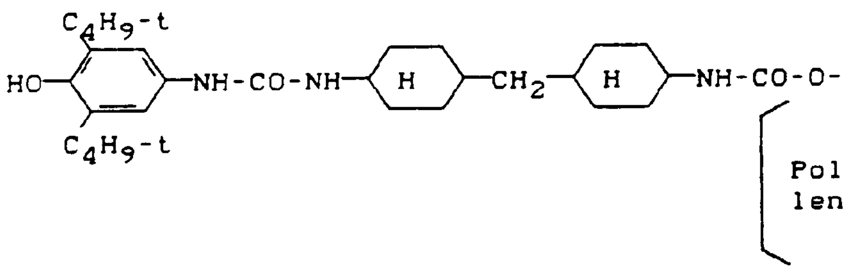

Polypropy-
lenoxid

S-5

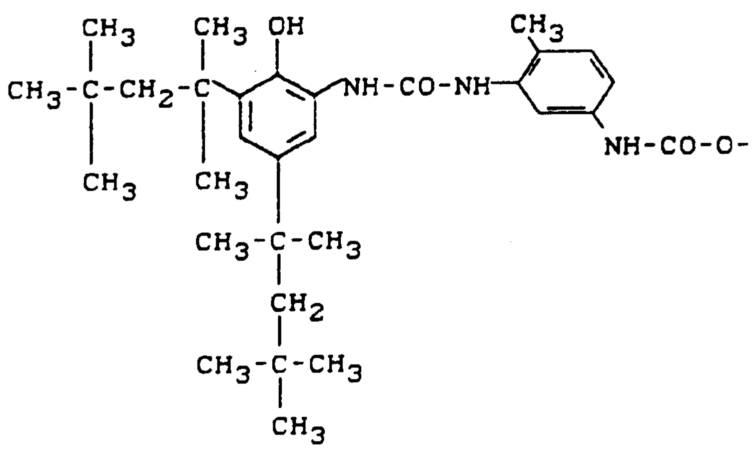

Polyester
aus Glutar-
säure und
Butandiol

S-6

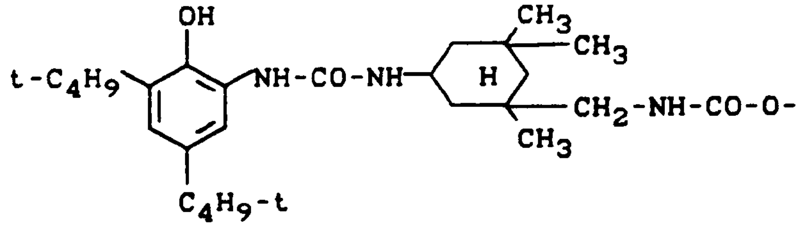

Polyester
Aus Adi-
pinsäure
und Butan-
diol/Neo-
pentylgly-
kol

S-7

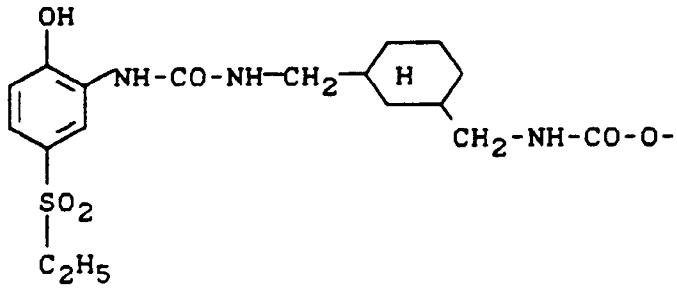

Polyester aus Adipinsäure/Terephthalsäure 1:1 und Butandiol

S-8

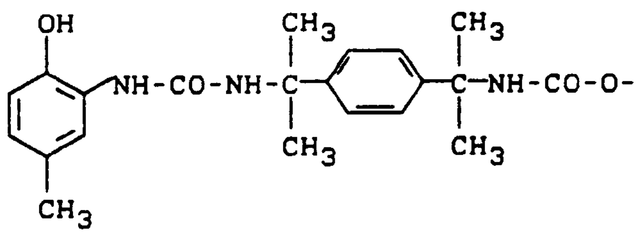

Polyester aus Adipinsäure und Propandiol

S-9

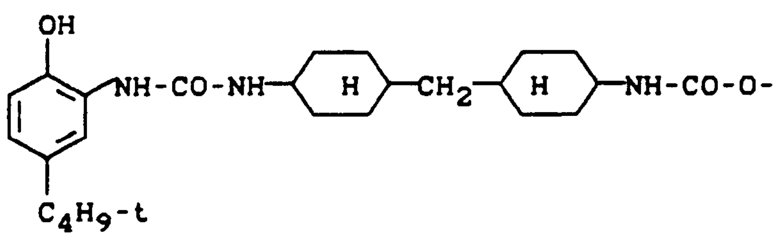

Polyester aus Bernsteinsäure und Butandiol

S-10

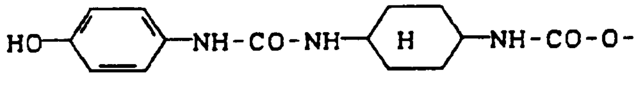

Polyester aus Maleinsäure und Butandiol

S-11

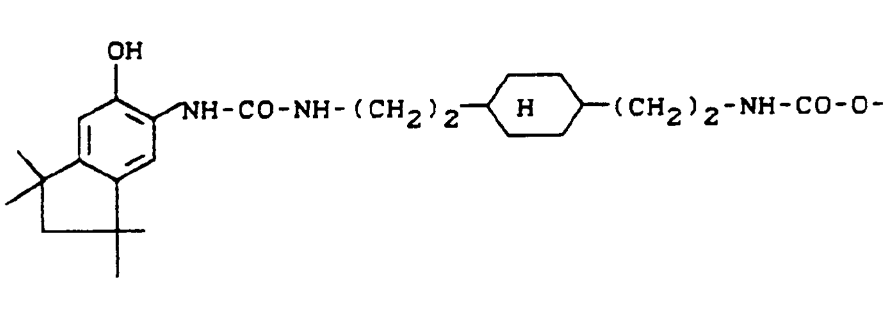

Polyester aus Adipinsäure und Neopentylglykol/Ethylenglykol

S-12

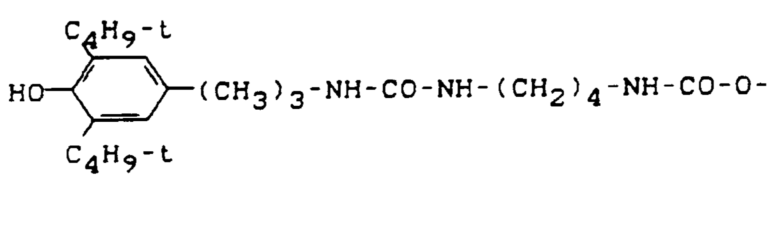

Polyester aus Adipinsäure und Neopentylglykol

Die Herstellung der erfindungsgemäßen Verbindungen kann auf einfache Weise durch Umsetzung von Aminen der Formel II (Ausgangsverbindung 1) mit polymeren Mono-, Di- oder Polyisocyanaten (Ausgangsverbindung 2) erfolgen.

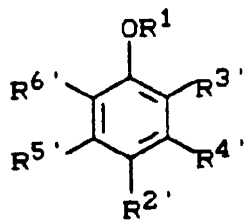

(II)

In Formel II haben $R^1$, A und n die bei Formel I angegebene Bedeutung;

$R^{2'}$ steht für -OH, Alkyl, Aryl, Alkoxy oder $-(A)_n-NH_2$;

$R^{3'}$, $R^{4'}$, $R^{5'}$ und $R^{6'}$ stehen für H, -OH, -COOH, $-SO_3H$, $-SO_2H$, Alkyl, Aryl, Alkoxy, Alkylsulfonyl, Arylsulfonyl, gegebenenfalls durch Alkyl und/oder Aryl substituiertes Sulfamoyl, Acylamino oder $-(A)_n-NH_2$,

mit der Maßgabe, daß mindestens einer der Reste $R^{2'}$, $R^{3'}$, $R^{4'}$, $R^{5'}$ und $R^{6'}$ für $-(A)_n-NH_2$ steht.

Als polymere Isocyanate (nachstehend als NCO-Prepolymer bezeichnet) eignen sich Isocyanatgruppen enthaltende Polymere, die durch Umsetzung von Verbindungen mit aktiven Wasserstoffatomen und Di- oder Polyisocyanaten erhalten werden. Die Verbindungen mit aktiven Wasserstoffatomen sind im wesentlichen linear und haben ein Molekulargewicht von etwa 300 bis 10 000, vorzugsweise 500 bis 4 000. Die an sich bekannten Verbindungen besitzen endständige Hydroxyl- und/oder Aminogruppen. Bevorzugt sind Polyhydroxylverbindungen, wie Polyester, Polyacetale, Polyether, Polyamide, Polyesteramide und Polycarbonate. Die Hydroxylzahl dieser Verbindungen entspricht demnach etwa 370 bis 10, insbesondere 225 bis 28.

Als Polyether seien z.B. die Polymerisationsprodukte des Ethylenoxids, Propylenoxids, Tetrahydrofurans, Butylenoxids sowie ihre Misch- oder Pfropfpolymerisationsprodukte, sowie die durch Kondensation von mehrwertigen Alkoholen oder Mischungen derselben gewonnenen Kondensate und die durch Alkoxylierung von

mehrwertigen Alkoholen gewonnenen Produkte genannt.

Als Polyacetale kommen z.B. die aus Hexandiol und Formaldehyd herstellbaren Verbindungen in Frage. Als Polyester, Polyesteramide und Polyamide sind die aus mehrwertigen gesättigten oder ungesättigten Carbonsäuren und mehrwertigen gesättigten Alkoholen, Aminoalkoholen, Diaminen und ihren Mischungen gewonnenen, überwiegend linearen Kondensate geeignet.

Auch bereits Urethan- oder Harnstoffgruppen enthaltende Polyhydroxylverbindungen sind verwendbar.

Selbstverständlich können zur Variation der Lyophilie bzw. der Hydrophobie und der mechanischen Eigenschaften der Verfahrensprodukte Mischungen verschiedener Polyhydroxylverbindungen eingesetzt werden.

Als Polyisocyanate zur Herstellung der NCO-Gruppen enthaltenden Polymere sind alle aromatischen und aliphatischen Diisocyanate oder Triisocyanate geeignet wie z.B. 1,5-Naphthylendiisocyanat, 4,4'-Diphenylmethandiisocyanat, 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats, gegebenenfalls in Mischung, vorzugsweise die aliphatischen Diisocyanate, Butan-1,4-diisocyanat, Hexan-1,6-diisocyanat, Dicyclohexylmethandiisocyanat, Cyclohexan-1,4-diisocyanat sowie Isophorondiisocyanat, Biuret-triisocyanat, 2,4-Bis-(4-isocyanatobenzyl)-1-isocyanatobenzol, Tris-(4-isocyanatophenyl)-methan, 2-Ethyl-1,2,3-tris-(3-isocyanato-4-methyl-anilinocarbonyloxy)-propan.

Die Herstellung der NCO-Prepolymeren kann nach den in Houben-Weyl, Band 205, S. 1613 ff (Georg Thieme Verlag, Stuttgart, New York, 1987) genannten Vorschriften erfolgen.

Die NCO-Prepolymere bzw. die durch Polykondensation erzeugten Polymere, deren Rest durch $R^8$ dargestellt ist, enthalten in ihrer Kette bevorzugt Urethangruppen und/oder Harnstoffgruppen, die bei der Umsetzung der aktive Wasserstoffatome enthaltenden Verbindungen mit Polyisocyanaten gebildet worden sind.

Herstellung von Verbindung S-1

136 g eines NCO-Prepolymers mit einem NCO-Gehalt von 0,1 mol, das aus einem mit Polyesterdiolen aus Adipinsäure und 1,4-Butandiol durch Umsetzung mit Hexamethylendiisocyanat erhalten wurde, werden in 200 g Aceton gelöst und unter Rühren mit 12,3 g 2-Hydroxy-5-methyl-anilin bei 30°C versetzt. Nach 4-stündigem Nachrühren bei 50°C wird das Aceton am Rotationsverdampfer abdestilliert und der Rückstand in Essigester gelöst, mit Wasser ausgeschüttelt und mit $Na_2SO_4$ getrocknet. Es wird eine viskose, klare Lösung mit einem Feststoffgehalt von 35 Gew.-% erhalten. Die Ausbeute beträgt 82 %. In gleicher Weise werden die Verbindungen S-2 bis S-12 hergestellt, wobei die in Tabelle 1 angegebenen Ausgangsverbindungen eingesetzt werden.

Tabelle 1

| Verbindung | Ausgangsverbindung 1 | Ausgangsverbindung 2 |
| --- | --- | --- |
| S-1 | 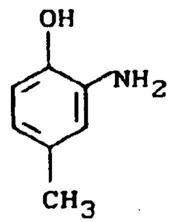 | NCO-Prepolymer: Polyester aus Adipinsäure und Butandiol, umgesetzt mit Hexamethylendiisocyanat |
| S-2 | 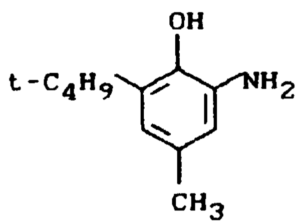 | NCO-Prepolymer: Polyester aus Phthalsäure, Adipinsäure und Ethylenglykol, umgesetzt mit Hexamethylendiisocyanat |
| S-3 | 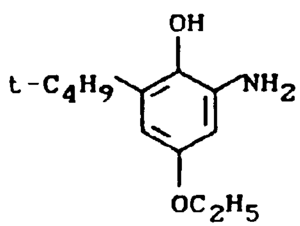 | NCO-Prepolymer: Polytetrahydrofuran, umgeetzt mit trans-1,4-Bis-(isocyanato)-cyclohexan, |
| S-4 | 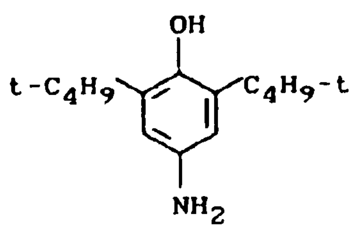 | NCO-Prepolymer aus Polypropylenoxid und Bis-(4-isocyanato-cyclohexyl)-methan |

<u>Tabelle 1</u> (Fortsetzung)

| Verbindung | Ausgangsverbindung 1 | Ausgangsverbindung 2 |
|---|---|---|
| S-5 | 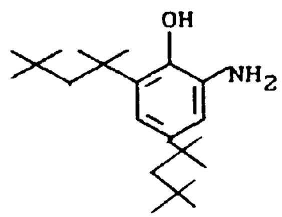 | NCO-Prepolymer: Polyester aus Glutarsäure und Butandiol, umgesetzt mit 2,4-Bis-(isocyanato)-toluol |
| S-6 | 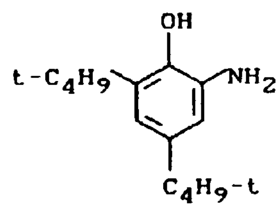 | NCO-Prepolymer: Polyester aus Adipinsäure, Butandiol und Neopentylglykol, umgesetzt mit Isophorondiisocyanat |
| S-7 | 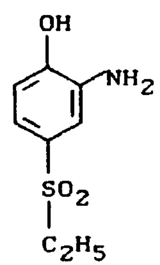 | NCO-Prepolymer: Polyester aus Adipinsäure, Terephthalsäure (1:1) und Butandiol, umgesetzt mit 1,3-Bis-(isocyanato-methyl)-cyclohexan |
| S-8 | 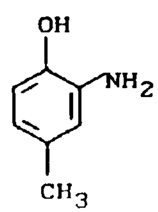 | NCO-Prepolymer: Polyester aus Adipinsäure und Propandiol, umgesetzt mit 1,4-Bis-(1-isocyanat-1-methyl-ethyl)-benzol |

<u>Tabelle 1</u> (Fortsetzung)

| Verbindung | Ausgangsverbindung 1 | Ausgangsverbindung 2 |
|---|---|---|
| S-9 | 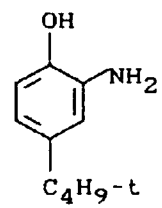 | NCO-Prepolymer: Polyester aus Bernsteinsäure und Butandiol, umgesetzt mit Bis-(4-isocyanato-cyclohexyl)-methan |
| S-10 | 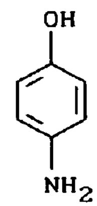 | NCO-Prepolymer: Polyester aus Maleinsäure und Butandiol, umgesetzt mit trans-1,4-Bis-(isocyanato)-cyclohexan |
| S-11 | 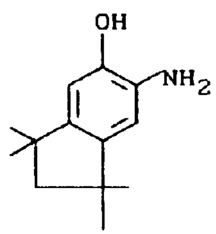 | NCO-Prepolymer: Polyester aus Adipinsäure, Neopentylglykol und Ethylenglykol, umgesetzt mit 1,4-Bis-(2-isocyanato-ethyl)-cyclohexan |
| S-12 | 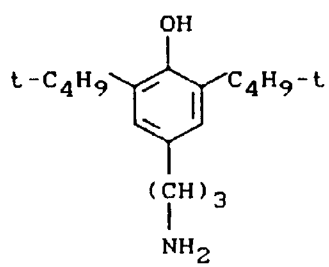 | NCO-Prepolymer: Polyester aus Adipinsäure und Neopentylglykol, umgesetzt mit Butan-1,4-diisocyanat |

Das erfindungsgemäße farbfotografische Aufzeichnungsmaterial enthält mindestens eine lichtempfindliche Silberhalogenidemulsionsschicht und vorzugsweise eine Abfolge mehrerer solcher lichtempfindlichen Silberhalogenidemulsionsschichten und gegebenenfalls weitere Hilfsschichten wie insbesondere Schutzschichten und zwischen den lichtempfindlichen Schichten angeordnete nicht lichtempfindliche Bindemittelschichten, wobei nach vorliegender Erfindung mindestens einer der vorhandenen lichtempfindlichen Silberhalogenidemulsionsschichten eine erfindungsgemäße Verbindung in Kombination mit einem Farbkuppler, vorzugsweise einem Magentakuppler, insbesondere vom Typ der Pyrazoloazolkuppler, oder einem Gelbkuppler zugeordnet ist.

Die erfindungsgemäßen Verbindungen wirken dabei in erster Linie als Lichtstabilisierungsmittel, d.h. die aus dem Farbkuppler bei der chromogenen Entwicklung gebildeten Farbstoffe, in der Regel Azomethinfarbstoffe, weisen in Gegenwart der erfindungsgemäßen Verbindungen eine beträchtlich erhöhte Stabilität gegenüber der Einwirkung von Licht auf. Weiterhin verbessern die erfindungsgemäßen Verbindungen auch die Stabilität der Farbstoff gegen die Einwirkung von Feuchtigkeit und Wärme, und sie wirken als Weichmacher. Daneben übernehmen die erfindungsgemäßen Verbindungen auch die Funktion eines Ölbildners für den Farbkuppler, d.h. sie können entweder allein oder zusammen mit anderen bekannten Ölbildnern als Kupplerlösungsmittel verwendet werden. Im letzteren Fall machen die erfindungsgemäßen Verbindungen vorzugsweise mindestens 50 Gew.-% der gesamten Ölbildnermenge in der jeweiligen Schicht aus. Der Umstand, daß weitere Ölbildner nicht erforderlich sind, wirkt sich günstig auf die Schichtbelastung und/oder die Gesamtschichtdicke der erfindungsgemäßen Aufzeichnungsmaterialien aus.

Die erfindungsgemäßen Verbindungen fallen bei der Herstellung (Umsetzung der aktive Wasserstoffatome enthaltenden Verbindungen mit Polyisocyanaten) meist als Lösung in aprotischen (hydrophoben) Lösungsmitteln, z.B. Ethylacetat, an und können in Form dieser Lösung unmittelbar bei der Einarbeitung in die Gießlösung für die betreffende Schicht, gegebenenfalls zusammen mit dem jeweiligen Farbkuppler, eingesetzt werden. Die Einarbeitung erfolgt in der üblichen Weise, wobei gegebenenfalls weitere Hilfslösungsmittel und/oder hochsiedende Kupplerlösungsmittel, sogenannte Ölbildner, letztere jedoch bevorzugt in untergeordneter Menge, verwendet werden können.

Das als lichtempfindlicher Bestandteil in dem erfindungsgemäßen fotografischen Aufzeichnungsmaterial befindliche Silberhalogenid kann als Halogenid Chlorid, Bromid oder Iodid bzw. Mischungen davon enthaltend Beispielsweise kann der Halogenidanteil wenigstens einer Schicht zu 0 bis 15 mol-% aus Iodid, zu 0 bis 100 mol-% aus Chlorid und zu 0 bis 100 mol-% aus Bromid bestehen.

Im Falle von Farbnegativ- und Farbumkehrfilmen werden üblicherweise Silberbromidiodidemulsionen, im Falle von Farbnegativ-und Farbumkehrpapier üblicherweise Silberchloridbromidemulsionen mit hohem Chloridanteil bis zu reinen Silberchloridemulsionen verwendet. Es kann sich um überwiegend kompakte Kristalle handeln, die z.B. regulär kubisch oder oktaedrisch sind oder Übergangsformen aufweisen können. Vorzugsweise können aber auch plättchenförmige Kristalle vorliegen, deren durchschnittliches Verhältnis von Durchmesser zu Dicke bevorzugt wenigstens 5:1 ist, wobei der Durchmesser eines Kornes definiert ist als der Durchmesser eines Kreises mit einem Kreisinhalt entsprechend der projizierten Fläche des Kornes. Die Schichten können aber auch tafelförmige Silberhalogenidkristalle aufweisen, bei denen das Verhältnis von Durchmesser zu Dicke wesentlich größer als 5:1 ist, z.B. 12:1 bis 30:1.

Die Silberhalogenidkörner können auch einen mehrfach geschichteten Kornaufbau aufweisen, im einfachsten Fall mit einem inneren und einem äußeren Kornbereich (core/shell), wobei die Halogenidzusammensetzung und/oder sonstige Modifizierungen, wie z.B. Dotierungen der einzelnen Kornbereiche unterschiedlich sind. Die mittlere Korngröße der Emulsionen liegt vorzugsweise zwischen 0,2 µm und 2,0 µm, die Korngrößenverteilung kann sowohl homo- als auch heterodispers sein. Homodisperse Korngrößenverteilung bedeutet, daß 95 % der Körner nicht mehr als ± 30% von der mittleren Korngröße abweichen.

Die Emulsionen können neben dem Silberhalogenid auch andere Silbersalze, z.B. organische Silbersalze enthalten, wie etwa Silberbenztriazolat oder Silberbehenat.

Es können zwei oder mehrere Arten von Silberhalogenidemulsionen, die getrennt hergestellt werden, als Mischung verwendet werden.

Die Emulsionen können in der üblichen Weise chemisch und oder spektral sensibilisiert sein; sie können auch durch geeignete Zusätze stabilisiert sein. Geeignete chemische Sensibilisatoren, spektrale Sensibilisierungsfarbstoffe und Stabilisatoren sind beispielsweise in Research Disclosure 17643 (Dezember 1978) beschrieben; verwiesen wird insbesondere auf die Kapitel III, IV und VI.

Das erfindungsgemäße farbfotografische Aufzeichnungsmaterial enthält bevorzugt mindestens je eine Silberhalogenidemulsionsschicht für die Aufzeichnung von Licht jedes der drei Spektralbereiche Rot, Grün und Blau. Zu diesem Zweck sind die lichtempfindlichen Schichten in bekannter Weise durch geeignete Sensibilisierungsfarbstoffe spektral sensibilisiert.

Eine Übersicht über die als Spektralsensibilisatoren geeigneten Polymethinfarbstoffe, deren geeignete Kombinationen und supersensibilisierend wirkenden Kombinationen enthält Research Disclosure 17643 (Dez. 1978),Kapitel IV.

Insbesondere sind die folgenden Farbstoffe - geordnet nach Spektralgebieten - geeignet:

1. als Rotsensibilisatoren
9-Ethylcarbocyanine mit Benzthiazol, Benzselenazol oder Naphthothiazol als basische Endgruppen, die in 5- und/oder 6-Stellung durch Halogen, Methyl, Methoxy, Carbalkoxy, Aryl substituiert sein können sowie 9-Ethyl-naphthoxathia- bzw. -selencarbocyanine und 9-Ethyl-naphthothiaoxa- bzw. -benzimidazocarbocyanine, vorausgesetzt, daß die Farbstoffe mindestens eine Sulfoalkylgruppe am heterocyclischen Stickstoff tragen.
2. als Grünsensibilisatoren
9-Ethylcarbocyanine mit Benzoxazol, Naphthoxazol oder einem Benzoxazol und einem Benzthiazol als basische Endgruppen sowie Benzimidazocarbocyanine, die ebenfalls weiter substituiert sein können und ebenfalls mindestens eine Sulfoalkylgruppe am heterocyclischen Stickstoff enthalten müssen.
3. als Blausensibilisatoren
symmetrische oder asymmetrische Benzimidazo-, Oxa-, Thia- oder Selenacyanine mit mindestens einer Sulfoalkylgruppe am heterocyclischen Stickstoff und gegebenenfalls weiteren Substituenten am aromatischen Kern, sowie Apomerocyanine mit einer Rhodaningruppe.

Als Beispiele seien, insbesondere für Negativ- und Umkehrfilm, die nachfolgend aufgeführen Rotsensibilisatoren RS, Grünsensibilisatoren GS und Blausensibilisatoren BS genannt, die jeweils einzeln oder in Kombination untereinander eingesetzt werden können, z.B. RS-1 und RS-2, sowie GS-1 und GS-2.

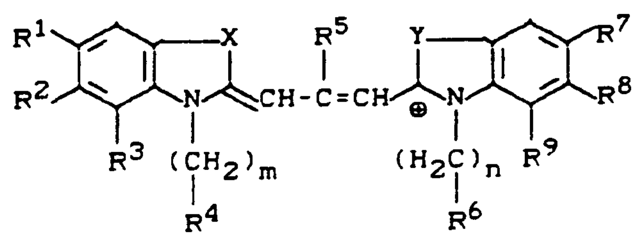

(III)

RS-1: $R^1$, $R^3$, $R^7$, $R^9$ = H; $R^2$, $R^8$ = Cl;
$R^4$ = $-SO_3^{\ominus}$ $NH(C_2H_5)_3^{\oplus}$; $R^5$ = $-C_2H_5$; $R^6$ = $-SO_3^{\ominus}$;
m, n = 3; X, Y = S;

RS-2: $R^1$, $R^3$, $R^9$ = H; $R^2$ = Phenyl;

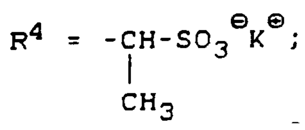

$R^5$ = $-C_2H_5$; $R^6$ = $-SO_3^{\ominus}$; $R^7$, $R^8$ = $-OCH_3$; m = 2;
n = 3; X = O; Y = S;

RS-3: $R^1$, $R^9$ = H; $R^2$, $R^3$ zusammen -CH=CH-CH=CH-;
$R^4$ = $-SO_3^{\ominus}Na^{\oplus}$; $R^5$ = $-C_2H_5$; $R^6$ = $-SO_3^{\ominus}$; $R^7$, $R^8$ = Cl;
m, n = 3; X = S; Y = $N-C_2H_5$;

RS-4: $R^1$ = $-OCH_3$; $R^2$, $R^8$ = $-CH_3$; $R^3$, $R^4$, $R^7$, $R^9$ = H;
$R^5$ = $-C_2H_5$; $R^6$ = $-SO_3^{\ominus}$; m = 2; n = 4; X = S;
Y = Se;

RS-5: $R^1$, $R^7$ = H; $R^2$, $R^3$ sowie $R^8$, $R^9$ zusammen
-CH=CH-CH=CH-; $R^4$ = - $SO_3^{\ominus}$ $NH(C_2H_5)_3^{\oplus}$; $R^5$ = $-C_2H_5$;
$R^6$ = $SO_3^{\ominus}$; m = 2; n = 3; X, Y = S;

GS-1: $R^1$, $R^3$, $R^7$, $R^9$ = H; $R^2$ = Phenyl;

$R^4$ = 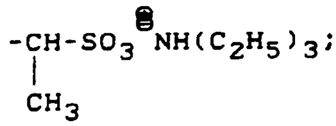

$R^5 = -C_2H_5$; $R^6 = -SO_3^{\ominus}$;
$R^8 = Cl$; $m = 2$; $n = 3$; $X, Y = O$;

GS-2: $R^1, R^2, R^7, R^8 = Cl$; $R^3, R^5, R^6, R^9 = H$;

$R^4$ = 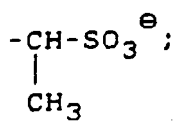

$m, n = 2$; $X, Y = N\text{-}C_2H_5$;

GS-3: $R^1, R^7 = H$; $R^2, R^3$ sowie $R^8, R^9$ zusammen $-CH{=}CH{-}CH{=}CH-$; $R^4 = SO_3^{\ominus}Na^{\oplus}$; $R^5 = C_2H_5$; $R^6 = SO_3^{\ominus}$; $m, n = 3$; $X, Y = O$;

GS-4: $R^1, R^3, R^4, R^7, R^8, R^9 = H$; $R^2 = -OCH_3$; $R^5 = -C_2H_5$; $R^6 = SO_3^{\ominus}$; $m = 2$; $n = 4$; $X = O$; $Y = S$;

BS-1:

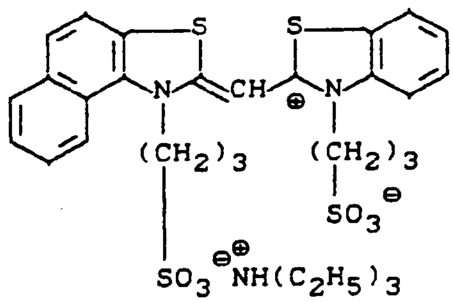

BS-2:

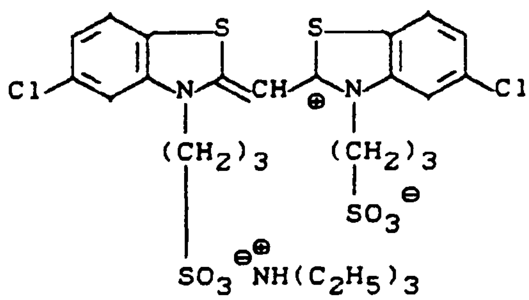

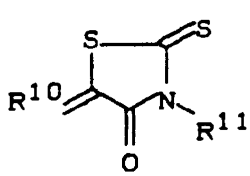

BS-3: $R^{10}$ = 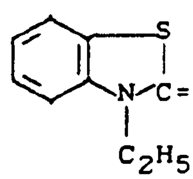 ;

$R^{11}$ = $-CH_2-COOH$;

BS-4: $R^{10}$ = 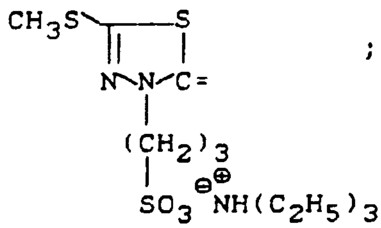 ;

$R^{11}$ = $-C_2H_5$;

BS-5: $R^{10}$ = 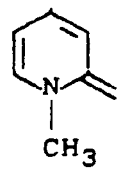 ;

$R^{11}$ = $-C_2H_5$;

Auf Sensibilisatoren kann verzichtet werden, wenn für einen bestimmten Spektralbereich die Eigenempfindlichkeit des Silberhalogenids ausreichend ist, beispielsweise die Blauempfindlichkeit von Silberbromiden.

Jede der genannten lichtempfindlichen Schichten kann aus einer einzigen Schicht bestehen oder in bekannter Weise, z.B. bei der sogenannten Doppelschichtanordnung, auch zwei oder auch mehr Silberhalogenidemulsionsteilschichten umfassen (DE-C-1 121 470). Bei Negativfilmen sind üblicherweise rotempfindliche Silberhalogenidemulsionsschichten dem Schichtträger näher angeordnet als grünempfindliche Silberhalogenidemulsionsschichten und diese wiederum näher als blauempfindliche, wobei sich im allgemeinen zwischen grünempfindlichen Schichten und blauempfindlichen Schichten eine nicht lichtempfindliche gelbe Filterschicht befindet. Es sind aber auch andere Anordnungen denkbar, z.B. bei Colorpapier. Zwischen Schichten unterschiedlicher Spektralempfindlichkeit ist in der Regel eine nicht lichtempfindliche Zwischenschicht angeordnet, die Mittel zur Unterbindung der Fehldiffusion von Entwickleroxidationsprodukten enthalten kann. Falls mehrere Silberhalogenidemulsionsschichten gleicher Spektralempfindlichkeit vorhanden sind, können diese einander unmittelbar benachbart sein oder so angeordnet sein, daß sich zwischen ihnen eine lichtempfindliche Schicht mit anderer Spektralempfindlichkeit befindet (DE-A-1 958 709, DE-A-2 530 645, DE-A-2 622 922).

Erfindungsgemäße farbfotografische Aufzeichnungsmaterialien enthalten üblicherweise in räumlicher und spektraler Zuordnung zu den Silberhalogenidemulsionsschichten unterschiedlicher Spektralempfindlichkeit Farbkuppler zur Erzeugung der unterschiedlichen Teilfarbenbilder Cyan, Magenta und Gelb, wobei die erfindungsgemäßen Verbindungen zusammen mit dem jeweiligen Farbkuppler bevorzugt einer grünempfindlichen Silberhalogenidemulsionsschicht und/oder einer blauempfindlichen Silberhalogenidemulsionsschicht zugeordnet sind.

Unter räumlicher Zuordnung ist dabei zu verstehen, daß der Farbkuppler sich in einer solchen räumlichen Beziehung zu der Silberhalogenidemulsionsschicht befindet, daß eine Wechselwirkung zwischen ihnen möglich ist, die eine bildgemäße Übereinstimmung zwischen dem bei der Entwicklung gebildeten Silberbild und dem aus dem Farbkuppler erzeugten Farbbild zuläßt. Dies wird in der Regel dadurch erreicht, daß der Farbkuppler in der Silberhalogenidemulsionsschicht selbst enthalten ist oder in einer hierzu benachbarten gegebenenfalls nichtlichtempfindlichen Bindemittelschicht.

Unter spektraler Zuordnung ist zu verstehen, daß die Spektralempfindlichkeit jeder der lichtempfindlichen Silberhalogenidemulsionsschichten und die Farbe des aus dem jeweils räumlich zugeordneten Farbkuppler erzeugten Teilfarbenbildes in einer bestimmten Beziehung zueinander stehen, wobei jeder der Spektralempfindlichkeiten (Rot, Grün, Blau) eine andere Farbe des betreffenden Teilfarbenbildes (im allgemeinen z.B. die Farben Cyan, Purpur bzw. Gelb in dieser Reihenfolge) zugeordnet ist.

Jeder der unterschiedlich spektral sensibilisierten Silberhalogenidemulsionsschichten kann ein oder können auch mehrere Farbkuppler zugeordnet sein. Wenn mehrere Silberhalogenidemulsionsschichten gleicher Spektralempfindlichkeit vorhanden sind, kann jede von ihnen einen Farbkuppler enthalten, wobei diese Farbkuppler nicht notwendigerweise identisch zu sein brauchen. Sie sollen lediglich bei der Farbentwicklung wenigstens annähernd die gleiche Farbe ergeben, normalerweise eine Farbe, die komplementär ist zu der Farbe des Lichtes, für das die betreffenden Silberhalogenidemulsionsschichten überwiegend empfindlich sind.

Farbkuppler zur Erzeugung des Teilfarbenbildes Cyan sind in der Regel Kuppler vom Phenol- oder α-Naphtholtyp; geeignete Beispiele hierfür sind:

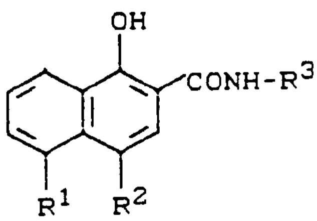

(IV)

C-1: $R^1$, $R^2$ = H;

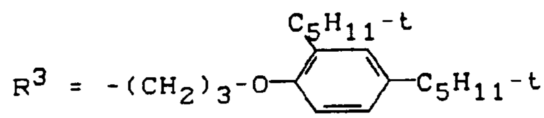

C-2: $R^1$ = $-NHCOOCH_2-CH(CH_3)_2$; $R^2$ = H;

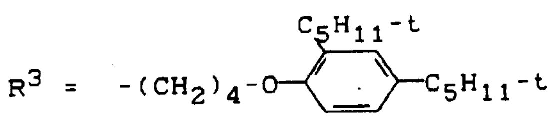

C-3: $R^1$ = H; $R^2$ = $-OCH_2-CH_2-SO_2CH_3$; $R^3$ = $-C_{16}H_{33}$

C-4: $R^1$ = H; $R^2$ = $-OCH_2-CONH-(CH_2)_2-OCH_3$;

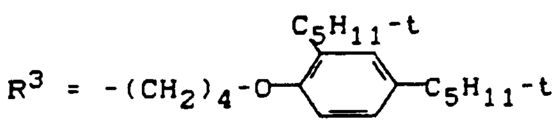

C-5: $R^1$, $R^2$ = H;

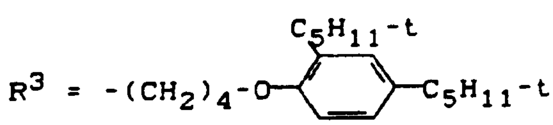

C-6: $R^1$, $R^2$ = H;

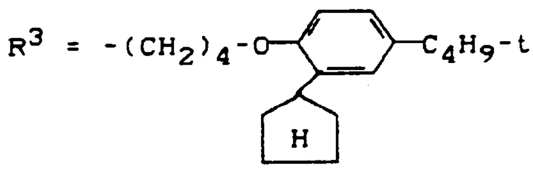

C-7: $R^1 = H$; $R^2 = Cl$; $R^3 = -C(C_2H_5)_2-C_{21}H_{43}$

C-8: $R^1 = H$; $R^2 = -O-CH_2-CH_2-S-CH(COOH)-C_{12}H_{25}$
$R^3$ = Cyclohexyl

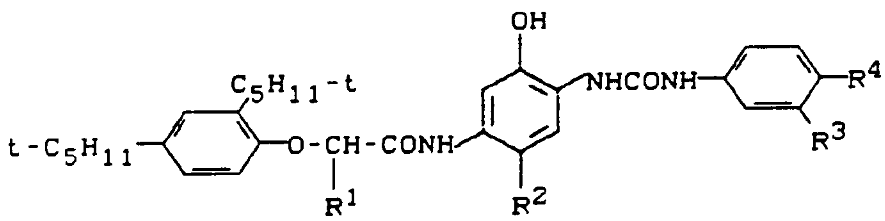

(V)

C-9: $R^1 = -C_4H_9$; $R^2 = H$; $R^3 = -CN$; $R^4 = Cl$

C-10: $R^1 = -C_4H_9$; $R^2 = H$; $R^3 = H$; $R^4 = -SO_2CHF_2$

C-11: $R^1 = -C_4H_9$;

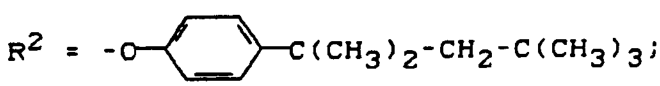

$R^3 = H$; $R^4 = -CN$

C-12: $R^1 = C_2H_5$; $R^2$, $R^3 = H$; $R^4 = -SO_2CH_3$

C-13: $R^1 = -C_4H_9$; $R^2$, $R^3 = H$; $R^4 = -SO_2-C_4H_9$

C-14: $R^1 = -C_4H_9$; $R^2 = H$; $R^3 = -CN$; $R^4 = -CN$

C-15: $R^1 = -C_4H_9$; $R^2$, $R^3 = H$; $R^4 = -SO_2-CH_2-CHF_2$

C-16: $R^1 = -C_2H_5$; $R^2$, $R^3 = H$; $R^4 = -SO_2CH_2-CHF-C_3H_7$

C-17: $R^1 = -C_4H_9$; $R^2$, $R^3 = H$; $R^4 = F$

C-18: $R^1 = -C_4H_9$; $R^2$, $R^3 =H$; $R^4 = -SO_2CH_3$

C-19: $R^1 = -C_4H_9$; $R^2$, $R^3 =H$; $R^4 = -CN$

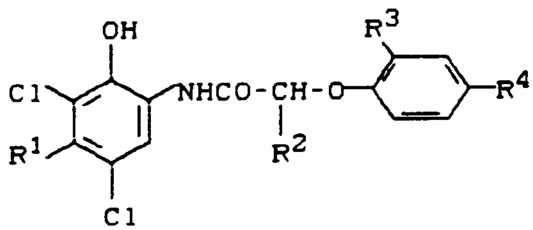

(VI)

C-20: $R^1 = -CH_3$; $R^2 = -C_2H_5$; $R^3$, $R^4 = -C_5H_{11}$-t

C-21: $R^1 = -CH_3$; $R^2 = H$; $R^3$, $R^4 = -C_5H_{11}$-t

C-22: $R^1$, $R^2 = -C_2H_5$; $R^3$, $R^4 = -C_5H_{11}$-t

C-23: $R^1 = -C_2H_5$; $R^2 = -C_4H_9$; $R^3$, $R^4 = -C_5H_{11}$-t

C-24: $R^1 = -C_2H_5$; $R^2 = -C_4H_9$; $R^3$, $R^4 = -C_4H_9$-t

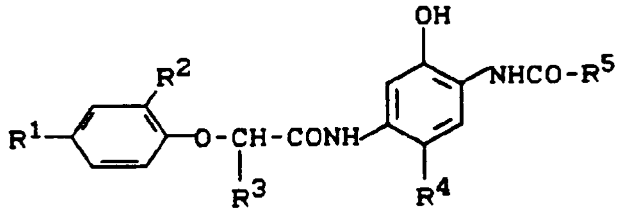

(VII)

C-25: $R^1$, $R^2$ = $-C_5H_{11}$-t; $R^3$ = $-C_4H_9$; $R^4$ = H; $R^5$ = $-C_3F_7$

C-26: $R^1$ = $-NHSO_2-C_4H_9$; $R^2$ = H; $R^3$ = $-C_{12}H_{25}$; $R^4$ = Cl; $R^5$ = Phenyl

C-27: $R^1$, $R^2$ = $-C_5H_{11}$-t; $R^3$ = $-C_3H_7$-i; $R^4$ = Cl; $R^5$ = Pentafluorphenyl

C-28: $R^1$ = $-C_5H_{11}$-t; $R^2$ = Cl; $R^3$ = $-C_6H_{13}$; $R^4$ = Cl; $R^5$ = -2-Chlorphenyl

Farbkuppler zur Erzeugung des Teilfarbenbildes Magenta sind in der Regel Kuppler vom Typ des 5-Pyrazolons, des Indazolons oder der Pyrazoloazole; geeignete Beispiele hierfür sind:

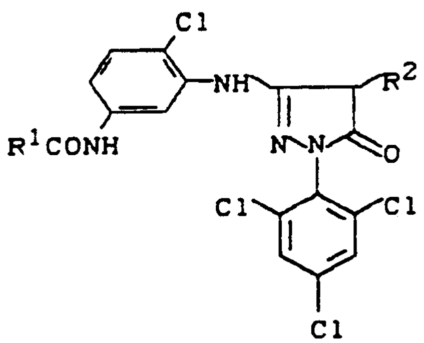

(VIII)

M-1:

$R^1$ = 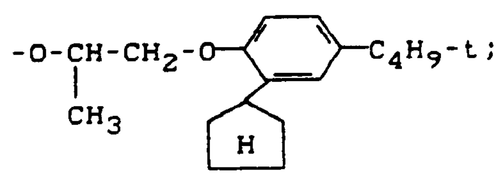

$R^2$ = H

M-2:

$R^1$ = 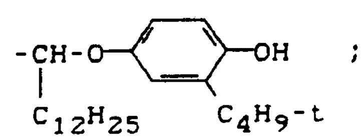

$R^2$ = H

M-3: $R^1$ = $-C_{13}H_{27}$; $R^2$ = H

M-4: $R^1$ = $-OC_{16}H_{33}$; $R^2$ = H

M-5: $R^1$ = $-C_{13}H_{27}$;

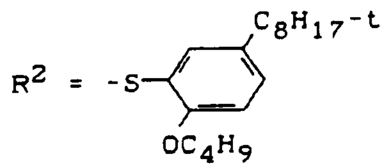

M-6:

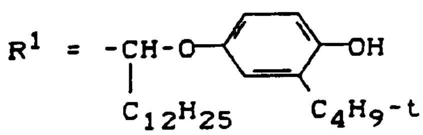
;
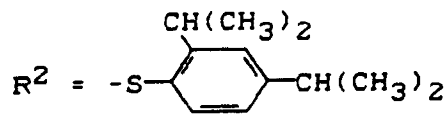

M-7: $R^1 = -C_9H_{19}$;

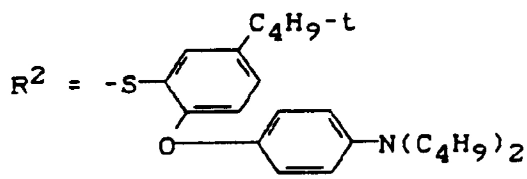

M-8:

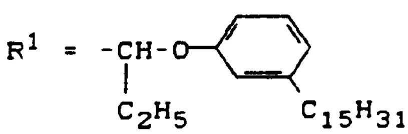
;
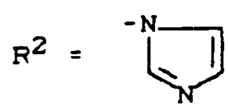

M-9:

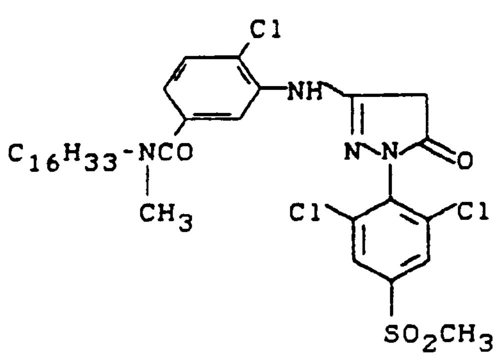

M-10:

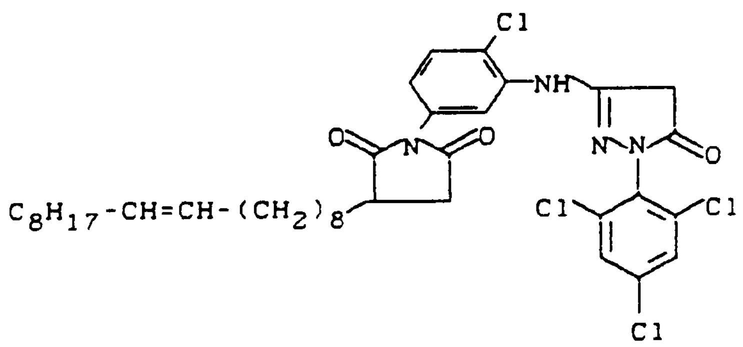

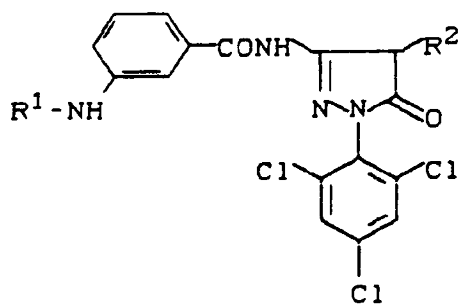

(IX)

M-11:

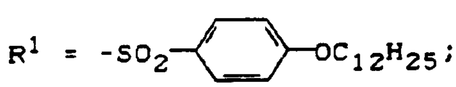

$R^2$ = H

M-12:

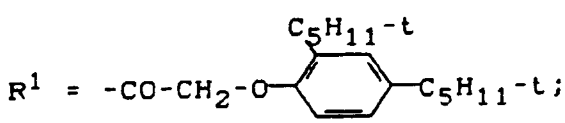

$R^2$ = H

M-13:

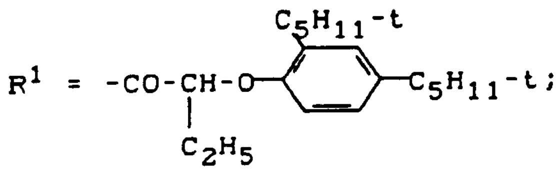

$R^2$ = H

M-14:

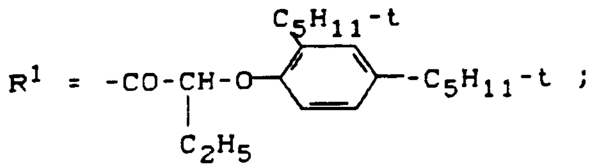

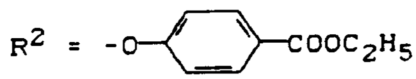

M-15:

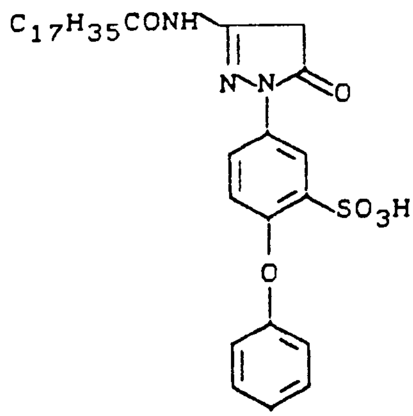

M-16:

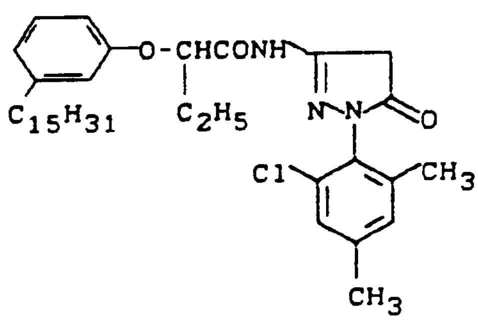

M-17:

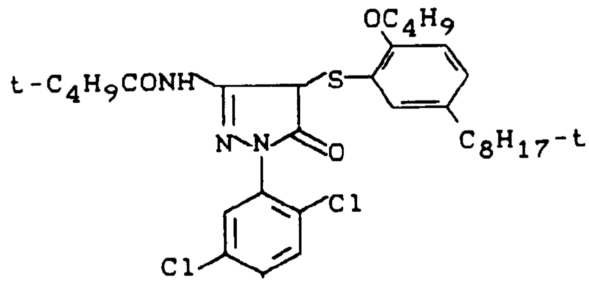

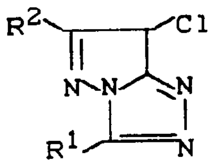

(Xa)

M-18:

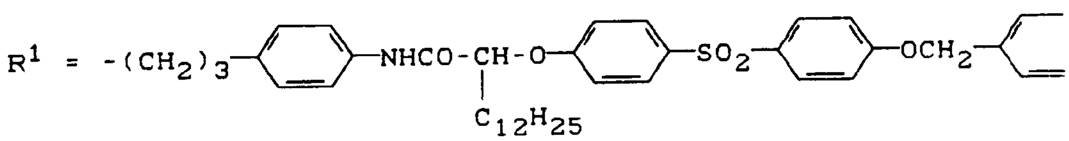

$R^2 = -CH_3$

M-19:

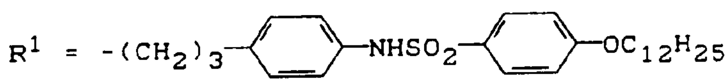

$R^2 = -CH_3$

M-20:

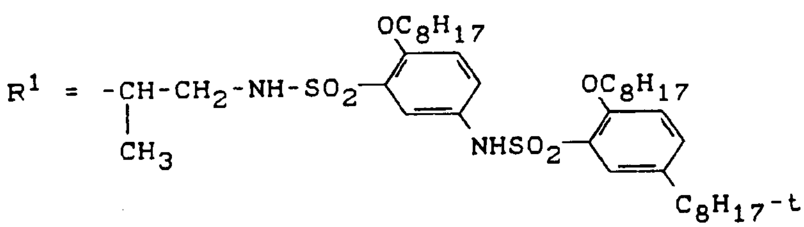

$R^2 = -C_4H_9\text{-}t$

M-21:

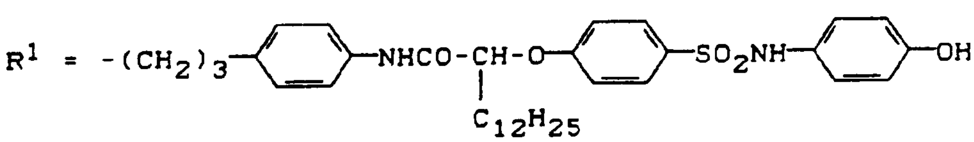

$R^2 = -CH_3$

M-22:

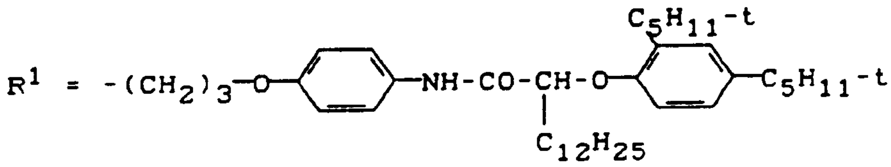

$R^2 = -CH_3$

M-23:

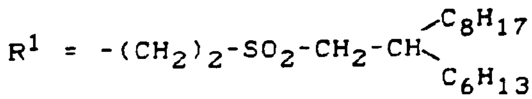

$R^2 = -CH_3$

M-24:

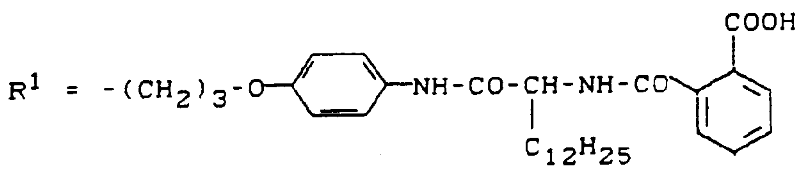

$R^2 = -CH_3$

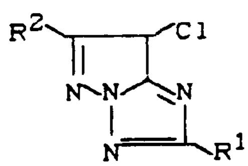

(XIa)

M-25:

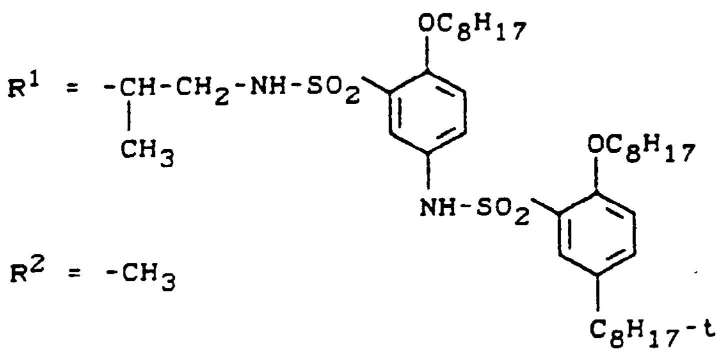

$R^2 = -CH_3$

M-26:

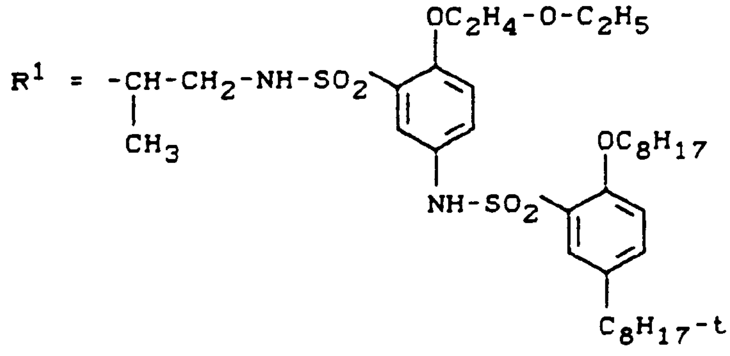

$R^2$ = $-CH_3$

M-27:

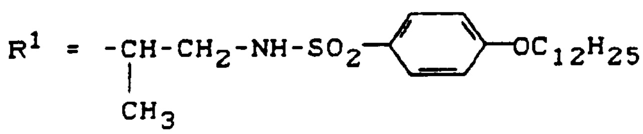

$R^2$ = $-C_3H_7$-i

M-28:

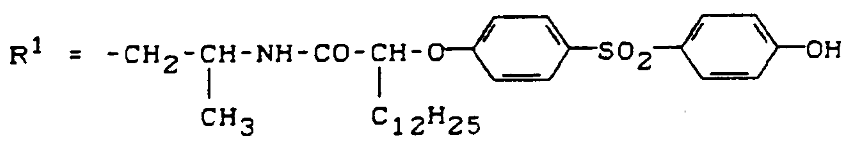

$R^2$ = $-CH_3$

M-29: $R^1$ = $-C_3H_7$-i

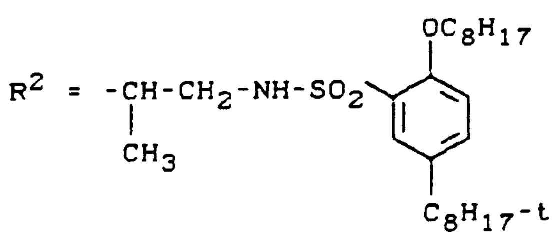

M-30:

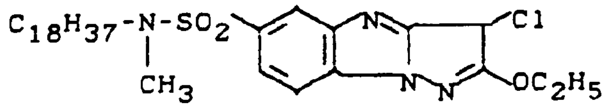

Pyrazoloazolkuppler der allgemeinen Formeln X und XI

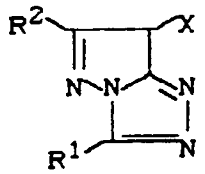 (X)

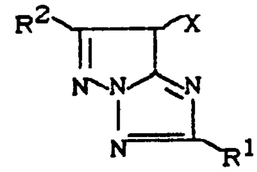 (XI)

sind beispielsweise in US-A-3 725 067 und US-A-4 540 654 beschrieben. In den Formeln X und XI bedeuten:

X H oder eine unter den Bedingungen der Farbentwicklung freisetzbare Gruppe;

$R^1$, $R^2$, H. Alkyl, Aralkyl, Aryl, Alkoxy, Aroxy, Alkylthio, Arylthio, Amino, Anilino, Acylamino, Cyano, Alkoxycarbonyl, Carbamoyl, Sulfamoyl, wobei diese Reste weiter substituiert sein können.

Farbkuppler zur Erzeugung des Teilfarbenbildes Gelb sind in der Regel Kuppler mit einer offenkettigen Ketomethylengruppierung, insbesondere Kuppler vom Typ des α-Acylacetamids; geeignete Beispiele hierfür sind α-Benzoylacetanilidkuppler und α-Pivaloylacetanilidkuppler der Formeln

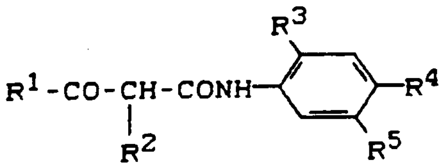 (XII)

Y-1: $R^1$ = $-C_4H_9$-t;

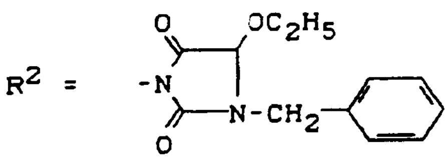 ;

$R^3$ = Cl; $R^4$ = H;

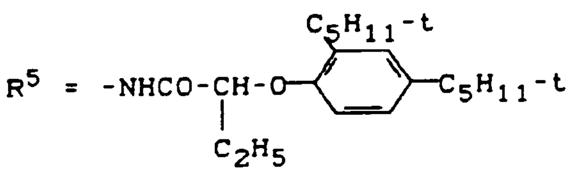

Y-2: $R^1$ = $-C_4H_9$-t;

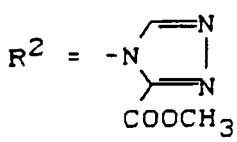 ;

$R^3$ = $-OC_{16}H_{33}$; $R^4$ = H;

$R^5$ = $-SO_2NHCH_3$

Y-3: $R^1$ = $-C_4H_9$-t;

$R^2$ = 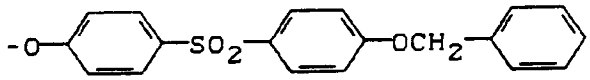 ;

$R^3$ = Cl
$R^4$ = H; $R^5$ = $-NHSO_2-C_{16}H_{33}$

Y-4: $R^1$ = $-C_4H_9$-t;

$R^2$ = 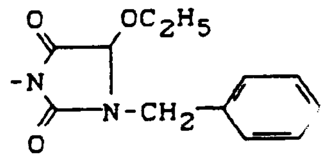 ;

$R^3$ = Cl;
$R^4$ = H; $R^5$ = $-COOC_{12}H_{25}$

Y-5: $R^1$ = $-C_4H_9$-t;

$R^2$ = 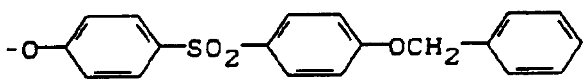 ;

$R^3$ = Cl;
$R^4$ = H;

$R^5$ = 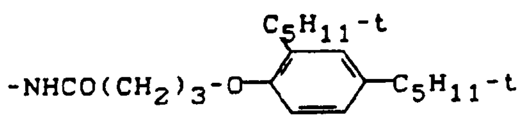

Y-6: $R^1$ = $-C_4H_9$-t;

$R^2$ = 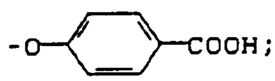

$R^3$ = Cl; $R^4$ = H;

$R^5$ = 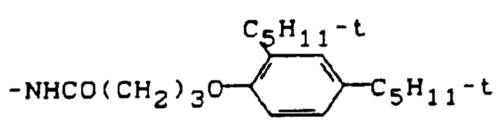

Y-7: $R^1$ = $-C_4H_9$-t;

$R^2$ = 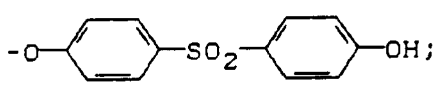

$R^3$ = Cl;
$R^4$ = H; $R^5$ = $-NHSO_2-C_{16}H_{33}$

Y-8: $R^1$ = $-C_4H_9$-t;

$R^2$ = 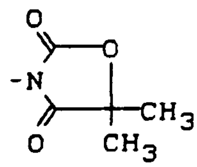 ;

$R^3$ = Cl; $R^4$ = H;

$R^5$ = 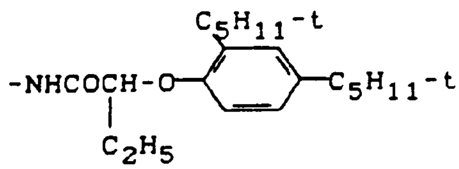

Y-9: $R^1$ = $-C_4H_9$-t;

$R^2$ = 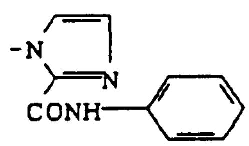 ;

$R^3$ = $-OC_{16}H_{33}$;
$R^4$ = H; $R^5$ = $-SO_2NHCOC_2H_5$

Y-10: $R^1$ = $-C_4H_9$-t;

$R^2$ = 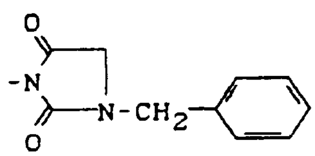 ;

$R^3$ = Cl; $R^4$ = H

$R_5$ = 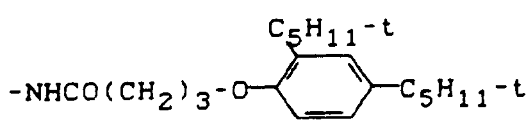

Y-11: $R^1$ = $-C_4H_9$-t;

$R^2$ = 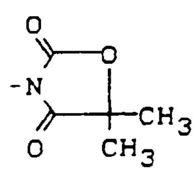 ;

$R^3$ = Cl; $R^4$ = H;

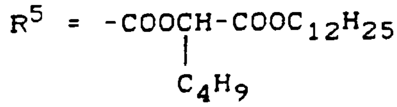

Y-12: $R^1$ = -$C_4H_9$-t;

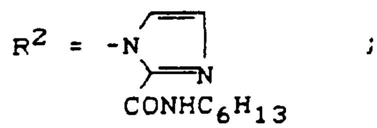

$R^3$ = Cl; $R^4$ = H;

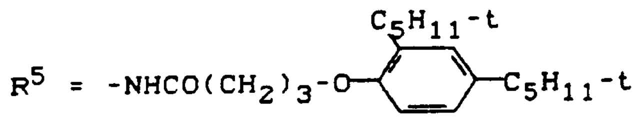

Y-13: $R^1$ = -$C_4H_9$-t;

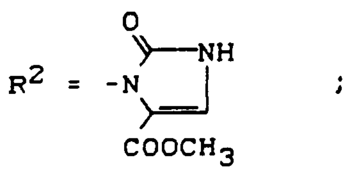

$R^3$ = -$OC_{16}H_{33}$; $R^4$ = H;
$R^5$ = -$SO_2NHCH_3$

Y-14: $R^1$ = -$C_4H_9$-t;

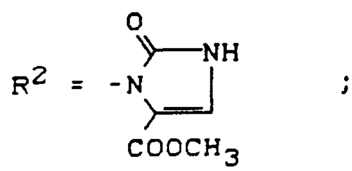

$R^3$ = Cl; $R^4$ = H;

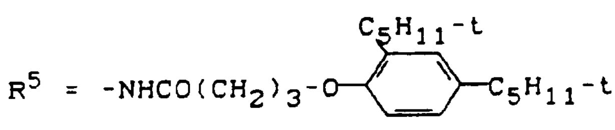

Y-15:

$R^1$ = 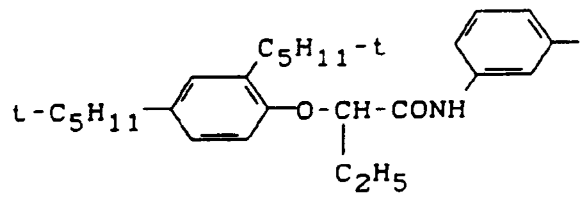 ;

$R^2$, $R^4$, $R^5$ = H; $R^3$ = $-OCH_3$

Y-16:

$R^1$ = 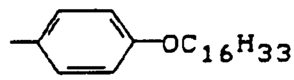 ; $R^2$ = 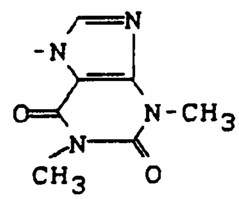

$R^3$, $R^5$ = $-OCH_3$; $R^4$ = H

Y-17:

$R^1$ = 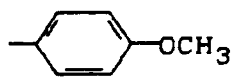 ; $R^2$ = 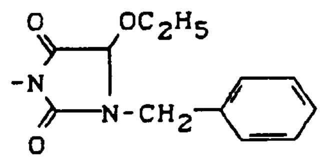

$R^3$ = Cl; $R^4$ = H; $R^5$ = $-COOC_{12}H_{25}$

Y-18:

$R^1$ = 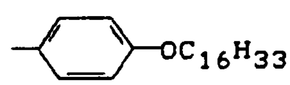 ; $R^2$ = 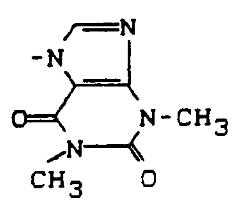

$R^3$ = Cl; $R^4$, $R^5$ = $-OCH_3$

Y-19:

$R^1$ = 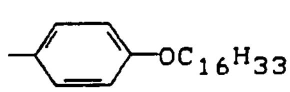 ; $R^2$ = 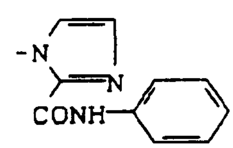

$R^3$ = $-OCH_3$; $R^4$ = H; $R^5$ = $-SO_2N(CH_3)_2$

Y-20:

$R^1$ = 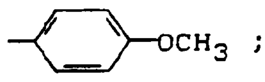 ;

$R^2$ = 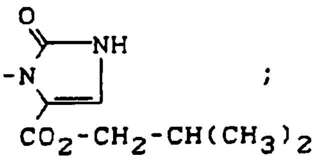 ;

$R^3$ = $-OCH_3$; $R^4$ = H;

$R_5$ = 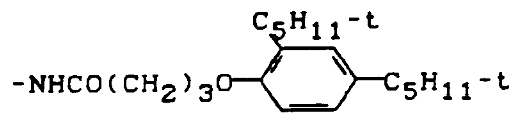

Y-21:

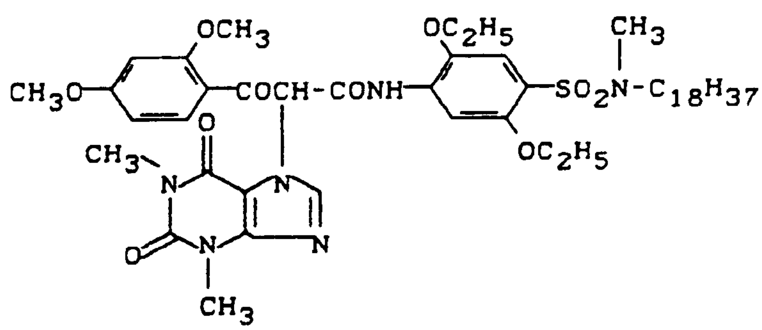

Bei den Farbkupplern kann es sich um 4-Äquivalentkuppler, aber auch um 2-Äquivalentkuppler handeln. Letztere leiten sich von den 4-Äquivalentkupplern dadurch ab, daß sie in der Kupplungsstelle einen Substituenten enthalten, der bei der Kupplung abgespalten wird. Zu den 2-Äquivalentkupplern sind solche zu rechnen, die farblos sind, als auch solche, die eine intensive Eigenfarbe aufweisen, die bei der Farbkupplung verschwindet bzw. durch die Farbe des erzeugten Bildfarbstoffes ersetzt wird (Maskenkuppler), aber auch die Weißkuppler, die bei Reaktion mit Farbentwickleroxidationsprodukten im wesentlichen farblose Produkte ergeben. Zu den 2-Äquivalentkupplern sind ferner solche Kuppler zu rechnen, die in der Kupplungsstelle einen abspaltbaren Rest enthalten, der bei Reaktion mit Farbentwickleroxidationsprodukten in Freiheit gesetzt wird und dabei entweder direkt oder nachdem aus dem primär abgespaltenen Rest eine oder mehrere weitere Gruppen abgespalten worden sind (z.B. DE-A-27 03 145, DE-A-28 55 697, DE-A-31 05 026, DE-A-33 19 428), eine bestimmte erwünschte fotografische Wirksamkeit entfaltet, z.B. als Entwicklungsinhibitor oder -accelerator. Beispiele für solche 2-Äquivalentkuppler sind die bekannten DIR-Kuppler wie auch DAR-bzw. FAR-Kuppler.

Die verwendeten Kuppler, d.h. insbesondere die Cyankuppler, beispielsweise der Formeln IV, V, VI und VII, die Magentakuppler, z.B. 2-Äquivalent- oder 4-Äquivalent-Magentakuppler vom Typ des Pyrazolons oder der Pyrazoloazole, beispielsweise der Formeln X und XI, können auch in polymerer Form, z.B. als Polymerisatlatex zur Anwendung gelangen.

Hochmolekulare Farbkuppler sind beispielsweise beschrieben in DE-C-1 297 417, DE-A-24 07 569, DE-A-31 48 125, DE-A-32 17 200, DE-A-33 20 079, DE-A-33 24 932, DE-A-33 31 743, DE-A-33 40 376, EP-A-27 284, US-A-4 080 211. Die hochmolekularen Farbkuppler werden in der Regel durch Polymerisation von ethylenisch ungesättigten monomeren Farbkupplern hergestellt.

Die verwendeten Farbkuppler können auch solche sein, die Farbstoffe mit einer schwachen bzw. eingeschränkten Beweglichkeit liefern.

Unter einer schwachen bzw. eingeschränkten Beweglichkeit ist eine Beweglichkeit zu verstehen, die so

bemessen ist, daß die Konturen der bei der chromogenen Entwicklung gebildeten diskreten Farbstoffflecken verlaufen und ineinander verschmiert werden. Dieses Ausmaß der Beweglichkeit ist einerseits zu unterscheiden von dem üblichen Fall der völligen Unbeweglichkeit in fotografischen Schichten, der in herkömmlichen fotografischen Aufzeichnungsmaterialien für die Farbkuppler bzw. die daraus hergestellten Farbstoffe angestrebt wird, um eine möglichst hohe Schärfe zu erzielen, und andererseits von dem Fall der völligen Beweglichkeit der Farbstoffe, der beispielsweise bei Farbdiffusionsverfahren angestrebt wird. Die letztgegenannten Farbstoffe verfügen meist über mindestens eine Gruppe, die sie im alkalischen Medium löslich machen. Das Ausmaß der erfindungsgemäß angestrebten schwachen Beweglichkeit kann gesteuert werden durch Variation von Substituenten um beispielsweise die Löslichkeit im organischen Medium des Ölbildners oder die Affinität zur Bindemittelmatrix in gezielter Weise zu beeinflussen.

Über die genannten Bestandteile hinaus kann das farbfotografische Aufzeichnungsmaterial der vorliegenden Erfindung weitere Zusätze enthalten, wie zum Beispiel Antioxidantien, farbstoffstabilisierende Mittel und Mittel zur Beeinflussung der mechanischen und elektrostatischen Eigenschaften sowie UV-Absorber. Vorteilhaft wurden solche zusätzlichen Verbindungen kombiniert mit den erfindungsgemäßen Verbindungen, d.h. in derselben Bindungsmittelschicht oder in zueinander benachbarten Bindemittelschichten verwendet.

Zusätze zur Verbesserung der Farbstoff-, Kuppler- und Weißenstabilität sowie zur Verringerung des Farbschleiers (Research Disclosure 17 643 (Dez. 1978), Kapitel VII) können den folgenden chemischen Stoffklassen angehören: Hydrochinone, 6-Hydroxychromane, 5-Hydroxy-cumarane, Spirochromane, Spiroindane, p-Alkoxyphenole, sterische gehinderte Phenole, Gallussäurederivate, Methylendioxybenzole, Aminophenole, sterisch gehinderte Amine, Derivate mit veresterten oder verätherten phenolischen Hydroxylgruppen, Metallkomplexe.

Verbindungen, die sowohl eine sterisch gehinderte Amin-Partialstruktur als auch eine sterisch gehinderte Phenol-Partialstruktur in einem Molekül aufweisen (US-A-4 268 593), sind besonders wirksam zur Verhinderung der Beeinträchtigung von gelben Farbbildern als Folge der Entwicklung von Wärme, Feuchtigkeit und Licht. Um die Beeinträchtigung von purpurroten Farbbildern, insbesondere ihre Beeinträchtigung als Folge der Einwirkung von Licht, zu verhindern, sind Spiroindane (JP-A-159 644/81) und Chromane, die durch Hydrochinondiether oder -monoether substituiert sind (JP-A-89 835/80) besonders wirksam.

Beispiele besonders geeigneter Verbindungen sind:

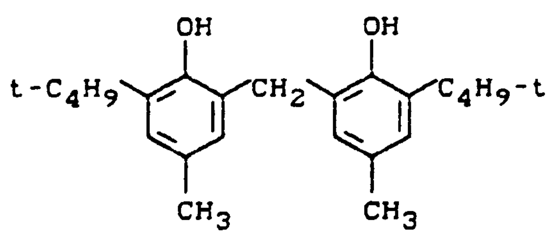

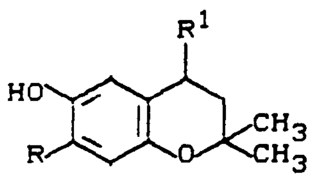

R = $-C_8H_{17}$-t ; $R^1$ = $-CH_3$
R = $-C_8H_{17}$ ; $R^1$ = $-C_3H_7$-i

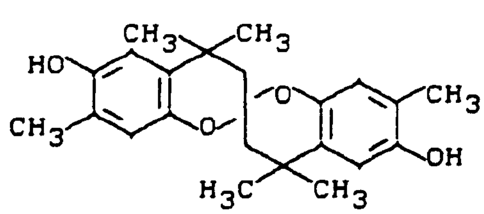

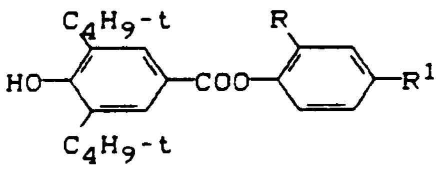

R, $R^1$ = $-C_4H_9$-t
R, $R^1$ = $-C_5H_{11}$-t

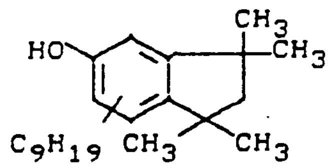

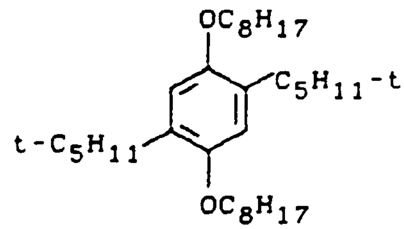

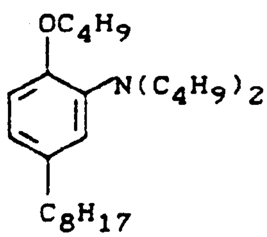

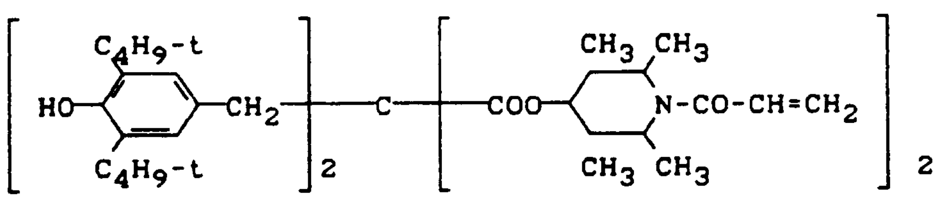

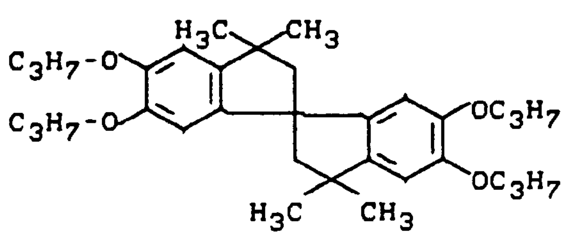

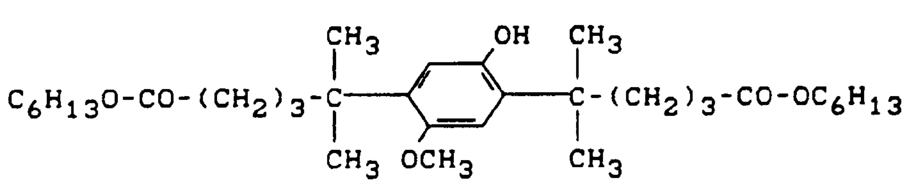

UV-Licht absorbierende Verbindungen sollen einerseits die Bildfarbstoffe vor dem Ausbleichen durch UV-reiches Tageslicht schützen und andererseits als Filterfarbstoffe das UV-Licht im Tageslicht bei der Belichtung absorbieren und so die Farbwiedergabe eines Films verbessern. Üblicherweise werden für die beiden Aufgaben Verbindungen unterschiedlicher Struktur eingesetzt. Beispiele sind arylsubstituierte Benzotriazolverbindungen (US-A-3 533 794), 4-Thiazolidonverbindungen (US-A-3 314 794 und 3 352 681), Benzophenonverbindungen (JP-A-2784/71), Zimtsäureesterverbindungen (US-A-3 705 805 und 3 707 375), Butadienverbindungen (US-A-4 045 229) oder Benzoxazolverbindungen (US-A-3 700 455).

Beispiele besonders geeigneter Verbindungen sind

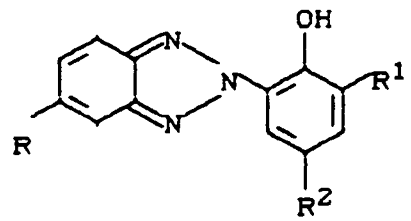

R, $R^1$ = H; $R^2$ = $-C_4H_9$-t
R = H; $R^1$, $R^2$ = $-C_4H_9$-t
R = H; $R^1$, $R^2$ = $-C_5H_{11}$-t
R = H; $R^1$ = $-C_4H_9$-s; $R^2$ = $-C_4H_9$-t
R = Cl; $R^1$ = $-C_4H_9$-t; $R^2$ = $-C_4H_9$-s
R = Cl; $R^1$, $R^2$ = $-C_4H_9$-t
R = Cl; $R^1$ = $-C_4H_9$-t; $R^2$ = $-CH_2-CH_2-COOC_8H_{17}$
R = H; R = $-C_{12}H_{25}$-i; $R^2$ = $-CH_3$
R, $R^1$, $R^2$ = $-C_4H_9$-t

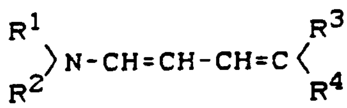

$R^1$, $R^2$ = $-C_6H_{13}$ ; $R^3$, $R^4$ = -CN
$R^1$, $R^2$ = $-C_2H_5$;

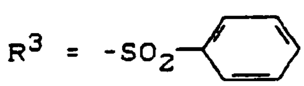 ;

$R^4$ = $-CO-OC_8H_{17}$
$R^1$, $R^2$ = $-C_2H_5$;

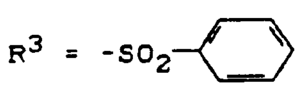 ;

$R_4$ = $-COO-C_{12}H_{25}$
$R^1$, $R^2$ = $-CH_2=CH-CH_2$; $R^3$, $R^4$ = -CN

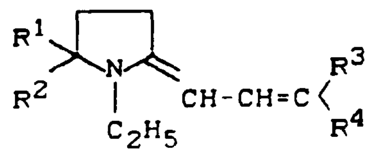

$R^1, R^2 = H$; $R^3 = -CN$; $R^4 = -CO-NHC_{12}H_{25}$
$R^1, R^2 = -CH_3$; $R^3 = -CN$; $R^4 = -CO-NHC_{12}H_{25}$

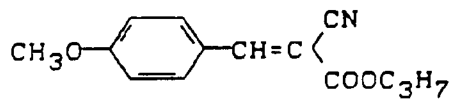

Es können auch ultraviolettabsorbierende Kuppler (wie Blaugrünkuppler des α-Naphtholtyps) und ultraviolettabsorbierende Polymere verwendet werden. Diese Ultraviolettabsorbentien können durch Beizen in einer speziellen Schicht fixiert sein.

Zur Herstellung farbfotografischer Bilder wird das erfindungsgemäße farbfotografische Aufzeichnungsmaterial, das zugeordnet zu mindestens einer Silberhalogenidemulsionsschicht einen Farbkuppler und eine Verbindung der Formel I enthält, mit einer Farbentwicklerverbindung entwickelt. Als Farbentwicklerverbindung lassen sich sämtliche Entwicklerverbindungen verwenden, die die Fähigkeit haben in Form ihres Oxidationsproduktes mit Farbkupplern zu Azomethinfarbstoffen zu reagieren. Geeignete Farbentwicklerverbindungen sind aromatische mindestens eine primäre Aminogruppe enthaltende Verbindungen vom p-Phenylendiamintyp, beispielsweise N,N-Dialkyl-p-phenylendiamine, wie N,N-Diethyl-p-phenylendiamin, 1-(N-ethyl-N-methylsulfonamidoethyl)-3-methyl-p-phenylendiamin, 1-(N-ethyl-N-hydroxyethyl-3-methyl-p-phenylendiamin und 1-(N-ethyl-N-methoxyethyl)-3-methyl-p-phenylendiamin.

Weitere brauchbare Farbentwickler sind beispielsweise beschrieben in J. Amer. Chem. Soc. 73, 3100 (1951) und in G. Haist, Modern Photographic Processing, 1979, John Wiley and Sons, New York, Seiten 545 ff.

Nach der Farbentwicklung wird das Material üblicherweise gebleicht und fixiert. Bleichung und Fixierung können getrennt voneinander oder auch zusammen durchgeführt werden. Als Bleichmittel können die üblichen Verbindungen verwendet werden, z.B. $Fe^{3+}$-Salze und $Fe^{3+}$-Komplexsalze wie Ferricyanide, Dichromate, wasserlösliche Kobaltkomplexe usw. Besonders bevorzugt sind Eisen-III-Komplexe von Aminopolycarbonsäuren insbesondere z.B. Ethylendiamintetraessigsäure, N-Hydroxyethylethylendiamintriessigsäure, Alkyliminodicarbonsäuren und von entsprechenden Phosphonsäuren. Geeignet als Bleichmittel sind weiterhin Persulfate.

## Beispiele

### Beispiel 1

Probe 1 (Vergleich)

Ein Schichtträger aus beidseitig mit Polyethylen beschichtetem Papier wurde mit folgenden Schichten versehen. Die Mengenangaben beziehen sich auf 1 $m^2$.

| | |
|---|---|
| Schicht 1 | Eine Substratschicht aus 200 mg Gelatine mit $KNO_3$- und Chromalaunzusatz. |
| Schicht 2 | Eine Haftschicht aus 320 mg Gelatine. |
| Schicht 3 | Eine grünempfindliche Silberbromidchloridemulsionsschicht (20 mol-% Chlorid) aus 530 mg $AgNO_3$ mit 750 mg Gelatine, 0,61 g Magentakuppler M-22, emulgiert mit 0,61 g Trikresylphosphat (TKP) |
| Schicht 4 | Eine Schutzschicht aus 1 g Gelatine und 16 mg eines Netzmittels der Formel |

$$C_8F_{17}\,SO_3^{\ominus}\;N(C_2H_5)_4^{\oplus} \qquad \text{(NM-1)}$$

Auf diese Schicht trägt man eine Härtungsschicht auf, die pro $m^2$ 120 mg Härtungsmittel der Formel

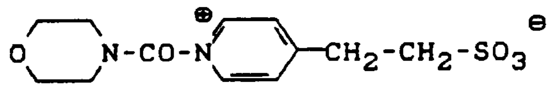

(HM-1)

enthält.

Proben 2 bis 8 (gemäß der Erfindung)

Proben 2 bis 8 wurden in der gleichen Weise wie Probe 1 hergestellt mit dem Unterschied, daß das in Probe 1 eingesetzte Trikresylphosphat durch eine der erfindungsgemäßen Verbindungen ersetzt wurde (s. Tabelle 2).

Die erhaltenen Proben wurden anschließend hinter einem graduierten Graukeil belichtet. Anschließend wurden die Materialien mit den nachfolgend aufgeführten Verarbeitungsbädern in folgender Weise verarbeitet:

| | |
|---|---|
| Entwicklung: | 210 s, 33°C |
| Bleichen: | 50 s, 20°C |
| Fixieren: | 60 s, 20°C |
| Wässern: | 120 s, 20° |
| Trocken | |

Zusammensetzung der Bäder

Entwickler:

| | | |
|---|---|---|
| Benzylalkohol | 13 | ml |
| Hydroxylammoniumsulfat | 3 | g |
| Natriumsulfit | 2 | g |
| 4-Amino-N-ethyl-N(β-methan-sulfonamido-ethyl)-m-toluidin-sesquisulfat (Monohydrat) | 4,5 | g |

| | |
|---|---|
| Kaliumcarbonat | 36 g |
| Kaliumbromid | 1,4 g |
| Diethylen-triamino-pentaessigsäure, Pentanatriumsalz | 2 g |
| Diethylenglykol | 12 ml |
| Auffüllen mit Wasser auf 1 Liter | |
| pH = | 10,4 |

| | | |
|---|---|---|
| Bleichbad: | Wasser | 700 ml |
| | $NH_4$-Fe-EDTA | 65 g |
| | EDTA | 10 g |
| | $MH_4Br$ | 100 g |
| | mit Essigsäure auf pH 6,0 einstellen, | |
| | Auffüllen mit Wasser aus 1 Liter | |

| | | |
|---|---|---|
| Fixierbad: | Ammoniumthiosulfat | 100 g |
| | Na-sulfit, sicc. | 10 g |
| | Na-disulfit | 3 g |
| | mit Wasser auffüllen auf 1 Liter. | |

Danach wurde die maximale Farbdichte gemessen (Tabelle 2).

Außerdem wurden die Proben dem Licht einer für Tageslicht normierten Xenonlampe ausgesetzt und mit 4,2 x $10^6$ lx.h belichtet; danach wurde die prozentuale Dichteabnahme gemessen (Tabelle 2).

Tabelle 2

| Probe | Ölbildner | $D_{max}$ | % Dichteabnahme D = 0,5 | 1,0 | $D_{max}$ |
|---|---|---|---|---|---|
| 1 (Vergleich) | 0,61 g Trikresylphosphat | 2,33 | 76 | 85 | 68 |
| 2 (erfindungsgemäß) | 0,61 g Verbindung S-1 | 2,51 | 61 | 67 | 55 |
| 3 (erfindungsgemäß) | 1,22 g Verbindung S-1 | 2,59 | 26 | 20 | 12 |
| 4 (erfindungsgemäß) | 0,61 g Verbundung S-2 | 2,37 | 60 | 63 | 58 |
| 5 (erfindungsgemäß) | 0,61 g Verbindung S-6 | 2,41 | 63 | 59 | 60 |
| 6 (erfindungsgemäß) | 0,61 g Verbindung S-7 | 2,39 | 58 | 61 | 55 |
| 7 (erfindungsgemäß) | 0,61 g Verbindung S-8 | 2,45 | 61 | 68 | 56 |
| 8 (erfindungsgemäß) | 0,61 g Verbindung S-11 | 2,40 | 52 | 58 | 53 |

Das Beispiel zeigt, daß durch die Verbindung der erfindungsgemäßen Verbindungen hohe maximale Farbdichten erzielt werden und gleichzeitig die Lichtstabilität des Bildfarbstoffs verbessert wird.

Beispiel 2

Es wird wie in Beispiel 1 beschrieben ein Schichtaufbau hergestellt mit dem Unterschied, daß in der grünempfindlichen Schicht anstelle des Magentakupplers M-22 der Magentakuppler M-31 verwendet wird. Man erhält so die Probe 9 (Vergleich).

Die Proben 10-14 werden in der gleichen Weise wie Probe 9 hergestellt mit dem Unterschied, daß das in Probe 9 eingesetzte Trikresylphosphat durch eine der erfindungsgemäßen Verbindungen ersetzt wurde. In gleicher Weise wird Probe 15 unter Verwendung des Vergleichspolymers VP-1 hergestellt. Die Verarbeitung und Prüfung erfolgt wie in Beispiel 1 beschrieben.

M-31

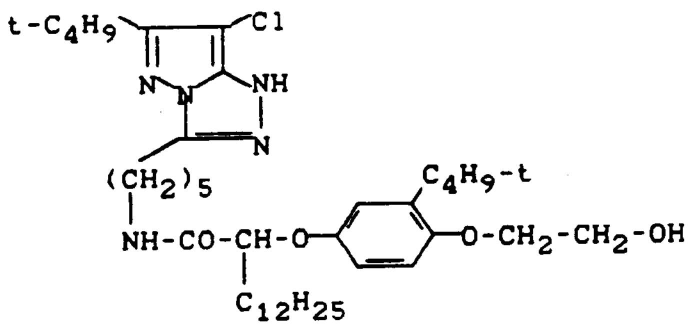

Tabelle 3

| Probe | Ölbildner | | $D_{max}$ | % Dichteabnahme | | |
|---|---|---|---|---|---|---|
| | | | | D = 0,5 | D = 1,0 | $D_{max}$ |
| 9 (Vergleich) | 0,61 g | TKP | 1,47 | 54 | 57 | 35 |
| 10 (erfindungsgemäß) | 0,61 g | Verbindung S-8 | 1,51 | 31 | 29 | 17 |
| 11 (erfindungsgemäß) | 1,22 g | Verbindung S-8 | 1,50 | 22 | 18 | 13 |
| 12 (erfindungsgemäß) | 0,61 g | Verbindung S-1 | 1,54 | 19 | 19 | 15 |
| 13 (erfindungsgemäß) | 1,22 g | Verbindung S-1 | 1,51 | 16 | 15 | 8 |
| 14 (erfindungsgemäß) | 0,61 g | Verbindung S-9 | 1,55 | 39 | 37 | 24 |
| 15 (Vergleich) | 0,61 g | VP-1 | 1,14 | 41 | 43 | 39 |

Das Beispiel zeigt, daß durch den Einsatz der erfindungsgemäßen Verbindungen die Lichtstabilität der Bildfarbstoffe verbessert wird. Das als Vergleich eingesezte Polymer VP-1 gemäß DE-A-35 01 722 bewirkt bei einer geringeren Verbesserung der Lichtstabilität eine deutlich verminderte maximale Farbdichte.

VP-1 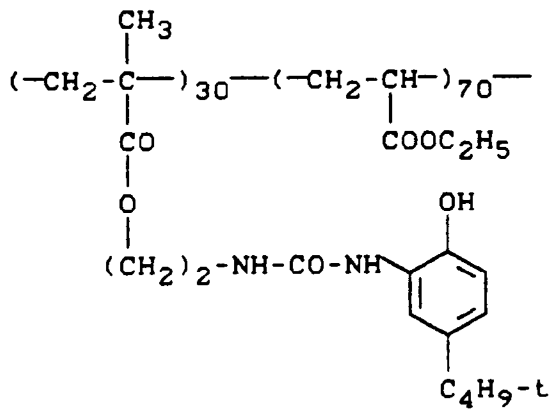

Beispiel 3

Probe 16 (Vergleich)

Ein Schichtträger aus beidseitig mit Polyethylen beschichtetem Papier wurde mit folgenden Schichten versehen. Die Mengenangaben beziehen sich auf 1 $m^2$.

| | |
|---|---|
| Schicht 1: | Eine Substratschicht aus 200 mg Gelatine mit $KNO_3$- und Chromalaunzusatz. |
| Schicht 2: | Eine Haftschicht aus 320 mg Gelatine. |
| Schicht 3: | Eine blauempfindliche Silberbromidchloridemulsionsschicht (20 mol-% Chlorid) aus 450 mg $AgNO_3$ mit 1600 mg Gelatine, 0,78 g Gelbkuppler Y-9, 27,7 mg 2,5-Dioctylhydrochinon emulgiert mit 0,78 g TKP.<br>Die Emulsion wurde durch Doppeleinlauf mit einer Korngröße von 0,8 µm hergestellt, in der üblichen Weise geflockt, gewaschen und mit Gelatine redispergiert. Das Gewichtsverhältnis Gelatine/Silber (als $AgNo_3$) betrug 0,5. Die Emulsion wurde anschließend mit 60 µmol Thiosulfat pro mol Ag zur optimalen Empfindlichkeit gereift, für den blauen Spektralbereich sensibilisiert und stabilisiert. |
| Schicht 4 | Eine Schutzschicht aus 1 g Gelatine und 16 mg Netzmittel NM-1<br>Auf diese Schicht trägt man eine Härtungsschicht auf, die pro $m^2$ 120 mg Härtungsmittel HM-1 enthält. |

Proben 17-20 (gemäß der Erfindung)

Proben 17-20 wurden in der gleichen Weise wie Probe 16 hergestellt mit dem Unterschied, daß das in Probe 16 eingesetzte Trikresylphosphat durch eine der erfindungsgemäßen Verbindungen ersetzt wurde (s. Tabelle 4).

Die Proben wurden wie in Beispiel 1 beschrieben, belichtet und verarbeitet. Die Proben wurden dem Licht einer für Tageslicht normierten Xenonlampe ausgesetzt und mit $19{,}2 \cdot 10^6$ lx.h bestrahlt; danach wurde die Dichteabnahme gemessen.

Tabelle 4

| Probe | Ölbildner | | $D_{max}$ | % Dichteabnahme |
|---|---|---|---|---|
| 16 (Vergleich) | 0,78 g | TKP | 2,30 | 61 |
| 17 (erfindungsgemäß) | 0,78 g | S-6 | 2,35 | 48 |
| 18 (erfindungsgemäß) | 0,78 g | S-9 | 2,31 | 44 |
| 19 (erfindungsgemäß) | 0,78 g | S-1 | 2,33 | 39 |
| 20 (erfindungsgemäß) | 0,78 g | S-2 | 2,35 | 45 |

Beispiel 4

Probe 21

Auf eine Cellulosetriacetatunterlage mit einer 4 µm dicken, aus Gelatine und schwarzem kolloidalen Silber bestehenden Antihaloschicht wurde eine 15 µm dicke rotsensibilisierte Blaugrün-Emulsionsschicht aufgebracht.

Die Schicht enthielt pro $m^2$:

8,13 g Gelatine
5,45 g TKP
7,13 g Silberbromid
2,7 g Magentakuppler M-22

In weiteren Proben wurde TKP durch die erfindungsgemäßen Verbindungen S-1, S-6, S-12 ersetzt (Proben 22-24).

Die Schichten wurden nach der Trocknung an ein Klima von 23°C und 20 % rel. Luftfeuchtigkeit angeglichen.

Die Brüchigkeit wurde mit der folgenden Apparatur bestimmt.

Eine Filmschleife, mit der Emulsionsschicht nach außen gekehrt, wird in ein Parallel-Backengerät mit Kraftmeßdose eingespannt. Mit einer Quetschgeschwindigkeit von 10 cm/s fährt die bewegliche Backe bis auf die doppelte Filmdicke an die festehende Backe und kehrt wieder um.

Der Kraft-Wegverlauf wird elektronisch und automatisch von einem XY-Schreiber aufgezeichnet.

Beim Bruch des Films wird

1. die Bruchkraft und
2. der Schleifendurchmesser bei Bruch

gemessen. Je höher die Bruchkraft und je niedriger der Schleifendurchmesser ist, um so geringer ist die Brüchigkeit des Films.

Tabelle 5

| Probe | Bruchfestigkeit (23° C, 20 % v.F.) Schleifendurchmesser bei Bruch [mm] | Bruchkraft [N] |
|---|---|---|
| 21 (Vergleich) | 0,5 | 27 |
| 22 (erfindungsgemäß) | 0,3 | 36 |
| 23 (erfindungsgemäß) | 0,4 | 31 |
| 24 (erfindungdgemäß) | 0,4 | 30 |

Aus den Werten ist ersichtlich, daß bei Verwendung der erfindungsgemäßen Verbindungen als Ölformer die mechanischen Eigenschaften verbessert werden und die Schichten ein verbessertes Bruchfestigkeitsverhalten aufweisen.

Beispiel 5

Ein für einen Schnellverarbeitungsprozeß geeignetes farbfotografisches Aufzeichnungsmaterial wurde hergestellt, indem auf einen Schichtträger aus beidseitig mit Polyethylen beschichtetem Papier die folgenden Schichten in der angegebenen Reihenfolge aufgetragen wurden. Die Mengenangaben beziehen sich jeweils auf 1 m². Für den Silberhalogenidauftrag werden die entsprechenden Mengen $AgNO_3$ angegeben.

Schichtaufbau 1 (Vergleich)

Schicht 1: (Substratschicht) 0,2 g Gelatine
Schicht 2: (blauempfindliche Schicht) blauempfindliche Silberhalogenidemulsion (99,5 mol-% Chlorid, 0,5 mol-% Bromid, mittlerer Korndurchmesser 0,8 µm) aus 0,63 g $AgNO_3$ mit
1,38 g Gelatine
0,95 g Gelbkuppler Y-3
0,2 g Weißkuppler W-1
0,29 g TKP
Schicht 3: (Schutzschicht)

1,1 g Gelatine
0,06 g 2,5-Dioctylhydrochinon
0,06 g Dibutylphthalat (DBP)

Schicht 4: (grünempfindliche Schicht)
grünsensibilisierte Silberhalogenidemulsion (99,5 mol-% Chlorid, 0,5 mol-% Bromid, mittlerer Korndurchmesser 0,6 µm) aus 0,45 g $AgNO_3$ mit
1,08 g Gelatine
0,41 g Magentakuppler M-22
0,08 g 2,5-Dioctylhydrochinon
0,50 g TKP

Schicht 5: (UV-Schutzschicht)
1,15 g Gelatine
0,6 g UV-Absorber der Formel

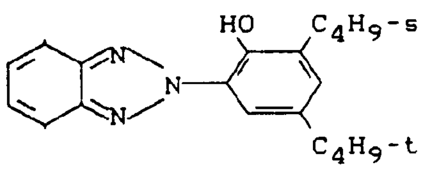

0,045g 2,5-Dioctylhydrochinon
0,04 g TKP

Schicht 6: (rotempfindliche Schicht)
rotsensibilisierte Silberhalogenidemulsion (99,5 mol-% Chlorid, 0,5 mol-% Bromid, mittlerer Korndurchmesser 0,5 µm) aus 0,3 g $AgNO_3$ mit
0,75 g Gelatine
0,36 g Cyankuppler C-24
0,36 g TKP

Schicht 7: (UV-Schutzschicht)
0,35 g Gelatine
0,15 g UV-Absorber wie in Schicht 5
0,2 g TKP

Schicht 8: (Schutzschicht)
0,9 g Gelatine
0,3 g Härtungsmittel HM-1

In Schicht 2 wurde folgende Verbindung (Weißkuppler W-1) verwendet:

W-1

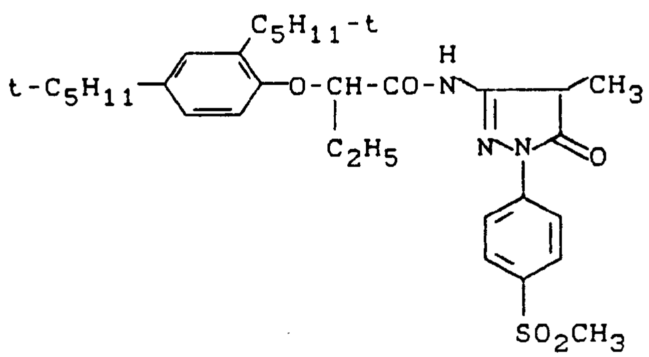

Schichtaufbauten 2-6 (gemäß der Erfindung)

Die Schichtaufbauten 2 bis 6 wurden in der gleichen Weise wie Schichtaufbau 1 hergestellt mit dem Unterschied, daß das in Schichtaufbau 1 in Schicht 4 eingesetzte TKP durch eine der erfindungsgemäßen Verbindungen in der gleichen Menge ersetzt wurde (siehe Tabelle 6).

Die erhaltenen Proben wurden anschließend hinter einem graduierten Graukeil belichtet. Anschließend wurden die Materialien mit den nachfolgend aufgeführten Verarbeitungsbädern in folgender Weise verarbeitet:

a) Farbentwickler - 45 s - 35°C

| | |
|---|---|
| Triethanolamin | 9,0 g |
| NN-Diethylhydroxylamin | 4,0 g |
| Diethylenglykol | 0,05 g |
| 3-Methyl-4-amino-N-ethyl-N-methan-sulfonamidoethyl-anilin-sulfat | 5,0 g |
| Kaliumsulfit | 0,2 g |
| Triethylenglykol | 0,05 g |
| Kaliumcarbonat | 22 g |
| Kaliumhydroxid | 0,4 g |
| Ethylendiamintetraessigsäure di-Na-Salz | 2,2 g |
| Kaliumchlorid | 2,5 g |
| 1,2-Dihydroxybenzol-3,4,6-trisulfonsäure-trinatriumsalz | 0,3 g |

auffüllen mit Wasser auf 1.000 ml; pH 10,0

b) Bleichfixierbad - 45 s - 35°C

| | |
|---|---|
| Ammoniumthiosulfat | 75 g |
| Natriumhydrogensulfit | 13,5 g |
| Ammoniumacetat | 2,0 g |
| Ethylendiamintetraessigsäure (Eisen-Ammonium-Salz) | 57 g |
| Ammoniak 25 %ig | 9,5 g |

auffüllen mit Essig auf 1.000 ml; pH 5,5

c) Wässern - 2 min - 33°C

Anschließend wurde die maximale Farbdichte des Magentafarbstoffes gemessen.

Außerdem wurden die Proben dem Licht einer für Tageslicht norminierten Xenonlampe ausgesetzt und mit 4,2 x $10^6$ lx·h belichtet; danach wurde die prozentuale Dichteabnahme gemessen (Tabelle 6).

Tabelle 6

| Schichtaufbau | Ölbildner in Schicht 4 | $D_{max}$ | Dichteabnahme [%] D = 0,5 | 1,0 | $D_{max}$ |
|---|---|---|---|---|---|
| 1 (Vergleich) | TKP | 1,75 | 58 | 63 | 55 |
| 2 (erfindungsgemäß) | S-1 | 1,83 | 43 | 48 | 42 |
| 3 (erfindungsgemäß) | S-2 | 1,85 | 40 | 45 | 41 |
| 4 (erfindungsgemäß) | S-6 | 1,79 | 42 | 47 | 40 |
| 5 (erfindungsgemäß) | S-8 | 1,51 | 43 | 48 | 41 |
| 6 (erfindungsgemäß) | S-11 | 1,83 | 38 | 44 | 38 |

Beispiel 6

Ein farbfotografisches Aufzeichnungsmaterial für die Colornegativfarbentwicklung wurde hergestellt (Schichtaufbau 7 - Vergleich), indem auf einen transparenten Schichtträger aus Cellulosetriacetat die folgenden Schichten in der angegebenen Reihenfolge aufgetragen wurden. Die Mengenangaben beziehen sich je-

weils auf 1 $m^2$. Für den Silberhalogenidauftrag werden die entsprechenden Mengen $AgNO_3$ angegeben. Alle Silberhalogenidemulsionen waren pro 100 g $AgNO_3$ mit 0,1 g 4-Hydroxy-6-methyl-1,3,3a,7-tetraazainden stabilisiert.

Schichtaufbau 7 (Vergleich)

| | |
|---|---|
| Schicht 1 | (Antihaloschicht)<br>schwarzes kolloidales Silbersol mit<br>0,2 g Ag<br>1,2 g Gelatine<br>0,10 g UV-Absorber UV-1<br>0,20 g UV-Absorber UV-2<br>0,02 g Trikresylphosphat (TKP)<br>0,03 g Dibutylphthalat (DBP) |
| Schicht 2 | (Mikrat-Zwischenschicht)<br>Mikrat-Silberbromidiodidemulsion (0,5 mol-% Iodid;<br>mittlerer Korndurchmesser 0,07μm)<br>aus 0,25 g $AgNO_3$, mit<br>1,0 g Gelatine<br>0,05 g Rotmaske RM-1<br>0,10 g TKP |
| Schicht 3 | (1. rotsensibilisierte Schicht, gering empfindlich)<br>rotsensibilisierte Silberbromidiodidemulsion<br>(4 mol-% Iodid;<br>mittlerer Korndurchmesser 0,45 μm)<br>aus 2,2 g $AgNO_3$, mit<br>2,0 g Gelatine<br>0,6 g Cyankuppler C-19<br>0,05 g Rotmaske RM-1<br>0,03 g DIR-Kuppler DIR-1<br>0,52 g TKP |
| Schicht 4 | (2. rotsensibilisierte Schicht, hochempfindlich)<br>rotsensibilisierte Silberbromidiodidemulsion<br>(8,5 mol-% Iodid;<br>mittlerer Korndurchmesser 0,8 μm)<br>aus 2,8 g $AgNO_3$, mit<br>1,8 g Gelatine<br>0,15 g Cyankuppler C-2<br>0,15 g DBP |
| Schicht 5 | (Zwischenschicht)<br>0,7 g Gelatine<br>0,2 g 2,5-Diisooctylhydrochinon<br>0,15 g DBP |
| Schicht 6 | (1. grünsensibilisierte Schicht, gering empfindlich)<br>grünsensibilisierte Silberbromidiodidemulsion<br>(4,5 mol-% Iodid;<br>mittlerer Korndurchmesser 0,4 μm)<br>aus 1,8 g $AgNO_3$, mit<br>1,6 g Gelatine<br>0,6 g Magentakuppler XM-1<br>0,05 g Gelbmaske YM-1<br>0,03 g DIR-Kuppler DIR-2<br>0,08 g DIR-Kuppler DIR-3<br>0,11 g TKP<br>0,02 g DBP |
| Schicht 7 | (2. grünempfindliche Schicht, hochempfindlich)<br>grünsensibilisierte Silberbromidiodidemulsion<br>(7 mol-% Iodid; |

mittlerer Korndurchmesser 8,7 µm)
aus 2,2 g $AgNO_3$, mit
1,4 g Gelatine
0,15 g Magentakuppler M-18
0,03 g Gelbmaske YM-1
0,48 g TKP

Schicht 8 (Zwischenschicht)
0,5 g Gelatine
0,1 g 2,5-Diisooctylhydrochinon
0,08 g DBP

Schicht 9 (Gelbfilterschicht)
gelbes kolloidales Silbersol mit
0,2 g Ag,
0,9 g Gelatine
0,2 g Diisooctylhydrochinon
0,16 g DBP

Schicht 10 (1. blauempfindliche Schicht, gering empfindlich)
blausensibilisierte Silberbromidiodidemulsion
(4,9 mol-% Iodid; mittlerer Korndurchmesser 0,45 µm)
aus 0,6 g $AgNO_3$, mit
0,85 g Gelatine
0,7 g Gelbkuppler XY-1
0,15 g DIR-Kuppler DIR-3
0,85 g TKP

Schicht 11 (2. blauempfindliche Schicht, hochempfindlich)
blausensibilisierte Silberbromidiodidemulsion
(9 mol-% Iodid;
mittlerer Korndurchmesser 0,9 µm)
aus 1,0 g $AgNO_3$, mit
0,85 g Gelatine
0,3 g Gelbkuppler XY-1
0,3 g TKP

Schicht 12 (Schutz- und Härtungsschicht)
Mikrat-Silberbromidiodidemulsion
(0,5 mol-% Iodid;
mittlerer Korndurchmesser 0,07 µm)
aus 0,5 g $AgNO_3$ mit
1,2 g Gelatine
0,4 g Härtungsmittel HM-2
1,0 g Formaldehydfänger FF

In Beispiel 6 werden außer den bereits erwähnten Kupplern folgende Verbindungen verwendet:

UV-1

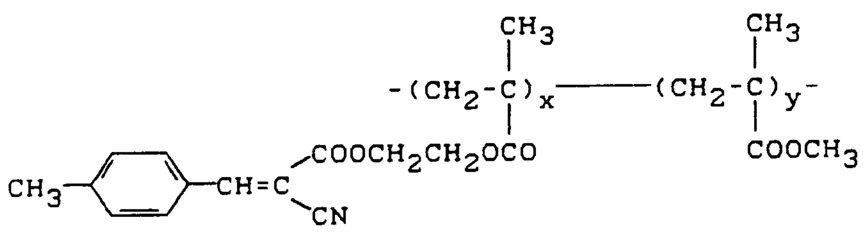

Gewichtsverhältnis: x : y = 7:3

UV-2

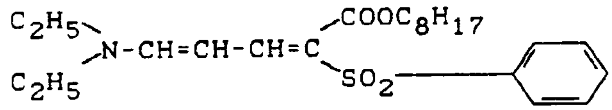

RM-1

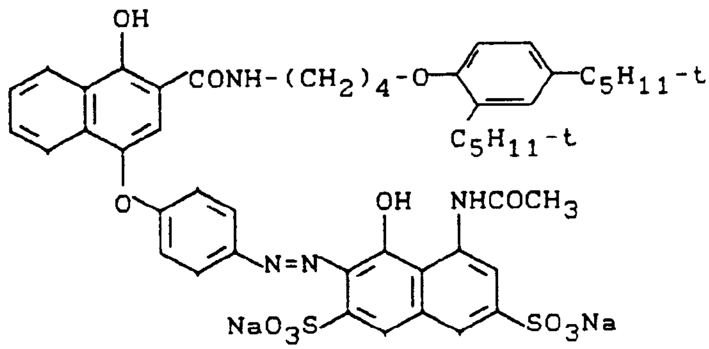

YM-1

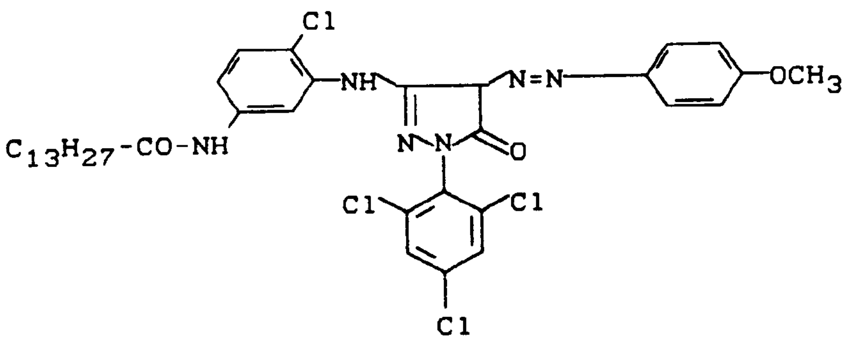

XM-1

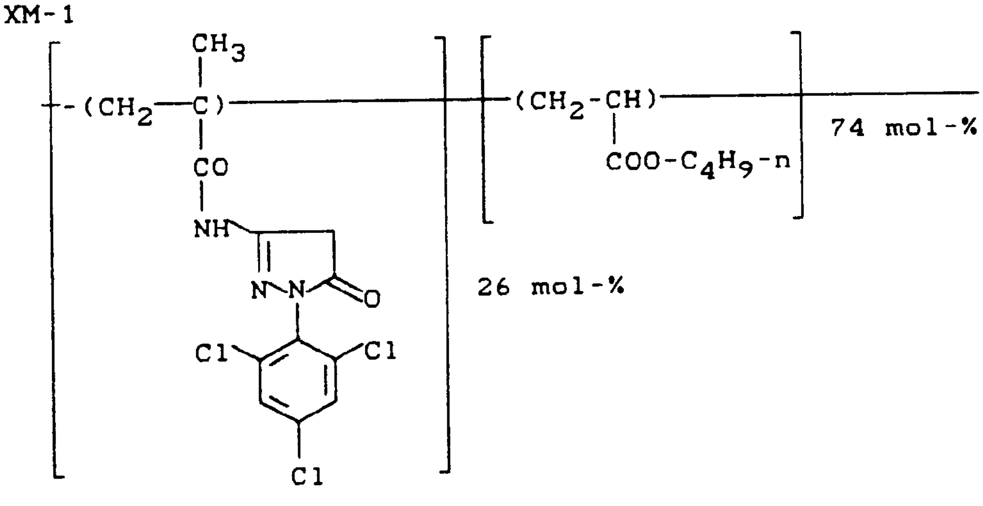

XY-1

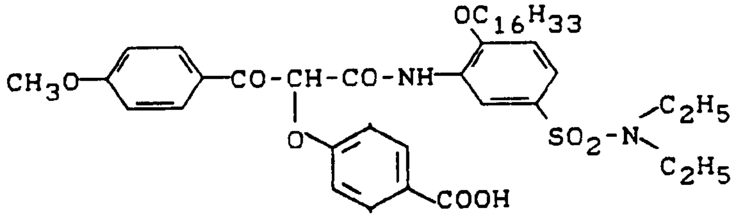

DIR-1

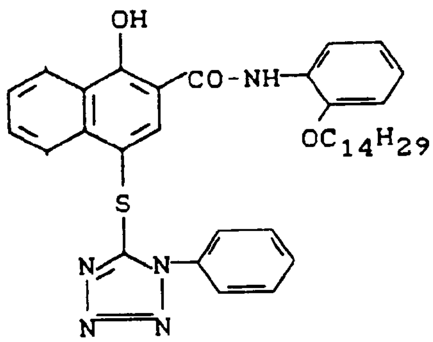

DIR-2

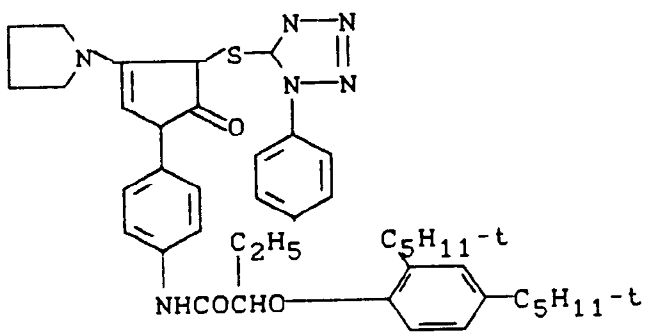

DIR-3

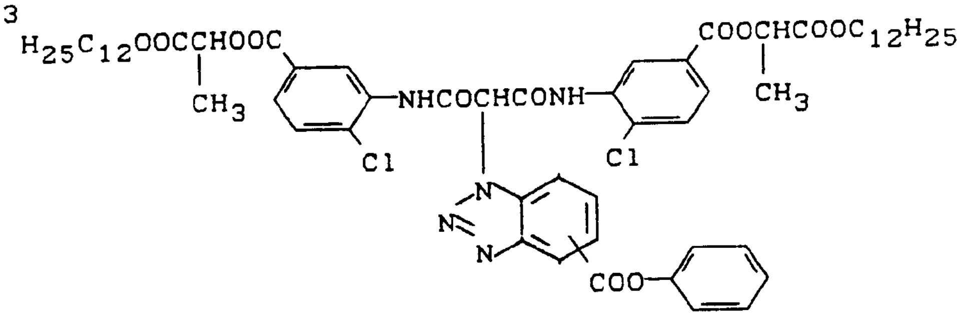

FF

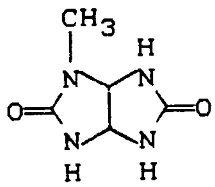

HM-2

$CH_2=CH-SO_2-CH_2-CONH-CH_2$

$CH_2=CH-SO_2-CH_2-CONH-CH_2$

Schichtaufbauten 8-10 (gemäß der Erfindung)

Die Schichtaufbauten 8 bis 10 wurden in der gleichen Weise wie der Schichtaufbau 7 hergestellt mit dem Unterschied, daß in allen Schichten TKP bzw. DBP durch eine der erfindungsgemäßen Verbindungen S-1, S-9 und S-12 ersetzt wurden.

Die Schichtaufbauten wurden nach der Trocknung an ein Klima von 23°C und 20 % rel. Luftfeuchtigkeit angeglichen.

Die Brüchigkeit wurde entsprechend Beispiel 4 bestimmt.

Tabelle 7

| Schichtaufbau | Ölbildner | Bruchfestigkeit (23° C, 20 % r.F.) | |
|---|---|---|---|
| | | Schleifendurchmesser bei Bruch [mn] | Bruchkraft [N] |
| 7 (Vergleich) | TKP/DBP | 0,8 | 23 |
| 8 (erfindungsgemäß) | S-1 | 0,3 | 34 |
| 9 ( " ) | S-9 | 0,4 | 30 |
| 10 ( " ) | S-12 | 0,4 | 31 |

Die erfindungsgemäßen Verbindungen verbessern bei Verwendung als Ölformer die mechanischen Eigenschaften und das Bruchfestigkeitsverhalten.

## Patentansprüche

1. Farbfotografisches Aufzeichnungsmaterial mit mindestens einer Silberhalogenidemulsionsschicht und einem dieser zugeordneten Farbkuppler, dadurch gekennzeichnet, daß es zugeordnet zu mindestens einer lichtempfindlichen Silberhalogenidemulsionsschicht eine Kombination aus einem Farbkuppler und einer Verbindung der allgemeinen Formel I enthält

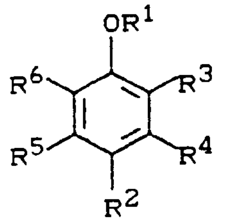

(I)

worin bedeuten

| | |
|---|---|
| $R^1$ | H, einen unter alkalischen Bedingungen abspaltbaren Rest, Alkyl oder Aryl; |
| $R^2$ | -OH, Alkyl, Aryl, Alkoxy oder |

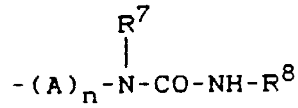

| | |
|---|---|
| $R^3$, $R^4$, $R^5$ und $R^6$ | H, -OH, -COOH, $-SO_3H$, $-SO_2H$, Alkyl, Aryl, Alkoxy, Alkylsulfonyl, Arylsulfonyl, gegebenenfalls z.B. durch Alkyl und/oder Aryl substituiertes Sulfamoyl, Acylamino oder |

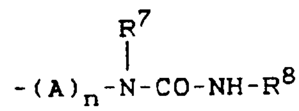

wobei mindestens einer der Reste $R^2$, $R^3$, $R^4$, $R^5$ und $R^6$ ein Rest der Formel

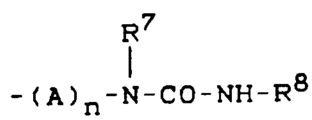

ist,

| | |
|---|---|
| A | Alkylen mit 1-6 C-Atomen; |
| n | 0 oder 1; |
| $R^7$ | H oder gegebenenfalls substituiertes Alkyl; |
| $R^8$ | den Rest eines durch Polykondensation erzeugten Polymers; |
| $R^1$ und $R^3$ | können einen 5- oder 6-gliedrigen Ring bilden, wobei $R^2$ = -OH oder Alkoxy; |
| $R^2$ und $R^4$ | können einen 5- oder 6-gliedrigen carbocyclischen Ring bilden. |

2. Aufzeichnungsmaterial nach Anspruch 1, dadurch gekennzeichnet, daß mindestens einer Silberhalogenidemulsionsschicht eine Verbindung der Formel I in Kombination mit einem Magentakuppler oder einem Gelbkuppler zugeordnet ist.

3. Aufzeichnungsmaterial nach Anspruch 2, dadurch gekennzeichnet, daß mindestens einer Silberhalogenidemulsionsschicht eine Verbindung der Formel I in Kombination mit einem Pyrazoloazolkuppler zugeordnet ist.

4. Aufzeichnungsmaterial nach Anspruch 3, dadurch gekennzeichnet, daß der Pyrazoloazolkuppler einer der Formeln X und XI entspricht

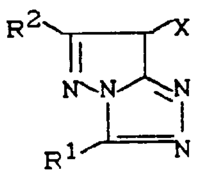 (X)

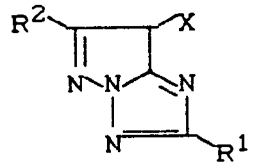 (XI)

worin bedeuten

X H oder eine unter den Bedingungen der Farbentwicklung freisetzbare Gruppe;

$R^1$, $R^2$ H, Alkyl, Aralkyl, Aryl, Alkoxy, Aroxy, Alkylthio, Arylthio, Amino, Anilino, Acylamino, Cyano, Alkoxycarbonyl, Carbamoyl, Sulfamoyl, wobei diese Reste weiter substituiert sein können.

## Claims

1. A colour photographic recording material comprising at least one silver halide emulsion layer and colour couplers associated therewith, characterized in that it contains a combination of a colour coupler and a compound correspond-ing to general formula I:

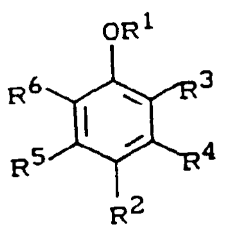 (I)

in which

$R^1$ represents H, a group releasable under alkaline conditions, alkyl or aryl;

$R^2$ represents -OH, alkyl, aryl, alkoxy or

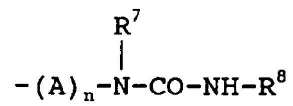

$R^3$, $R^4$, $R^5$ and $R^6$ represent H, -OH, -COOH, $-SO_3H$, $-SO_2H$, alkyl, aryl, alkoxy, alkylsulfonyl, arylsulfonyl, sulfamoyl optionally substituted for example by alkyl and/or aryl, acylamino or

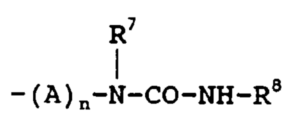

at least one the substituents $R^2$, $R^3$, $R^4$, $R^5$ and $R^6$ being a group corresponding to the formula

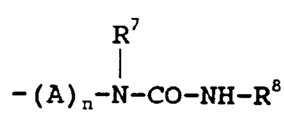

A represents $C_{1-6}$ alkylene;
n = 0 or 1;
$R^7$ represents H or optionally substituted alkyl;
$R^8$ represents the residue of a polymer prepared by polycondensation;
$R^1$ and $R^3$ may form a 5- or 6-membered ring, in which case $R^2$ = -OH or alkoxy;
$R^2$ and $R^4$ may form a 5- or 6-membered carbocyclic ring,
associated with at least one photosensitive silver halide emulsion layer.

2. A recording material as claimed in claim 1, characterized in that a compound corresponding to formula I in combination with a magenta coupler or a yellow coupler is associated with at least one silver halide emulsion layer.

3. A recording material as claimed in claim 2, characterized in that a compound corresponding to formula I in combination with a pyrazoloazole coupler is associated with at least one silver halide emulsion layer.

4. A recording material as claimed in claim 3, characterized in that the pyrazoloazole coupler corresponds to one of formulae X and XI

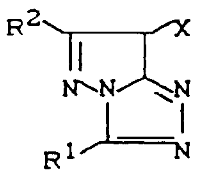 (X)

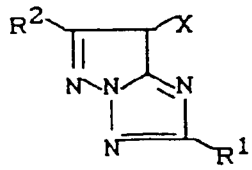 (XI)

in which
X represents H or a group releaseable under the conditions of colour development;
$R^1$, $R^2$ represent H, alkyl, aralkyl, aryl, alkoxy, aroxy, alkylthio, arylthio, amino, anilino, acylamino, cyano, alkoxycarbonyl, carbamoyl, sulfamoyl, which in turn may be substituted.

## Revendications

1. Support d'enregistrement pour la photographie couleur, comprenant au moins une couche d'émulsion à l'halogénure d'argent et un copulant chromogène associé à cette couche, caractérisé en ce qu'il contient, associée à au moins une couche photosensible d'émulsion à l'halogénure d'argent, une combinaison d'un copulant chromogène et d'un composé de formule générale I

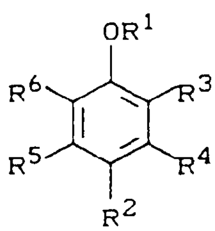 (I)

dans laquelle
$R^1$ représente H, un reste éliminable dans des conditions alcalines, alkyle ou aryle ;
$R^2$ représente -OH, un groupe alkyle, aryle, alkoxy ou

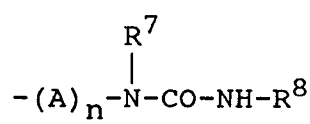

$R^3$, $R^4$ $R^5$ et $R^6$ représente H, un groupe -OH, -COOH, $-SO_3H$, $-SO_2H$, alkyle, aryle, alkoxy, alkyl-

sulfonyle, arylsulfonyle, un groupe sulfamoyle éventuellement substitué par exemple par un radical alkyle et/ou aryle, un groupe acylamino ou un groupe

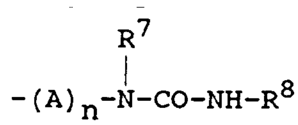

l'un au moins des restes $R^2$, $R^3$, $R^4$, $R^5$ et $R^6$ étant un reste de formule

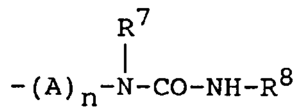

| | |
|---|---|
| A | est un groupe alkylène ayant 1 à 6 atomes de carbone ; |
| n | a la valeur 0 ou 1 ; |
| $R^7$ | représente H ou un groupe alkyle éventuellement substitué ; |
| $R^8$ | représente le reste d'un polymère produit par polycondensation ; |
| $R^1$ et $R^3$ | peuvent former un noyau pentagonal ou hexagonal, $R^2$ étant un groupe -OH ou alkoxy ; |
| $R^2$ et $R^4$ | peuvent former un noyau carbocyclique pentagonal ou hexagonal. |

2. Support d'enregistrement suivant la revendication 1, caractérisé en ce qu'un composé de formule I est associé à au moins une couche d'émulsion à l'halogénure d'argent en combinaison avec un copulant magenta ou un copulant jaune.

3. Support d'enregistrement suivant la revendication 2, caractérisé en ce qu'un composé de formule I est associé à au moins une couche d'émulsion à l'halogénure d'argent en combinaison avec un copulant pyrazolo-azolique.

4. Support d'enregistrement suivant la revendication 3, caractérisé en ce que le copulant pyrazolo-azolique répond à l'une des formules X et XI

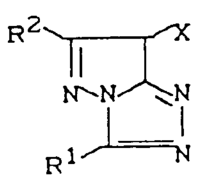

(X)

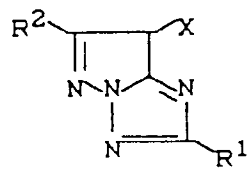

(XI)

dans lesquelles

| | |
|---|---|
| X | représente H ou un groupe pouvant être libéré dans les conditions de développement de la couleur ; |
| $R^1$, $R^2$ | représentent H, un reste alkyle, aralkyle, aryle, alkoxy, aroxy, alkylthio, arylthio, amino, anilino, acylamino, cyano, alkoxycarbonyle, carbamoyle, sulfamoyle, ces restes pouvant en outre être substitués. |